# EUROPEAN PATENT APPLICATION

(11) **EP 1 231 544 A2**
(43) Date of publication of application: **14.08.2002**
(21) Application number: 02002885.8
(22) Date of filing: 07.02.2002
(51) Int. Cl.: G06F 17/28

(54) **Everyday language-based computing system and method**

(30) Priority: 09.02.2001 JP 2001033464
(71) Applicant: RIKEN, Wako-shi, Saitama-ken (JP)
(72) Inventor: Sugeno, Michio, Wako-Shi, Saitama-ken (JP); Kobayashi, Ichiro, Wako-Shi, Saitama-ken (JP); Ito, Noriko, Wako-Shi, Saitama-ken (JP); Iwazume, Michiaki, Wako-Shi, Saitama-ken (JP)
(74) Representative: Liesegang, Roland, Dr.-Ing.

(57) **Abstract**

The everyday language-based computing system 1 comprises a client-oriented language computing system 10 and a network-oriented language computing system 20 connected thereto. The language-based computing systems 10 and 20 include language computers 12 and 22 for processing a language text described or dictated by an everyday language, and language-based operating systems 16 and 26 for managing the language computers 12 and 22 by the everyday language, respectively. The language computers 12 and 22 include semiotic bases 13 and 23 which are prepared by structuring the system of meanings of the everyday language, and meaning processing mechanisms 14 and 24 for understanding the meaning of the language text and generating a language text on the basis of the semiotic bases 13 and 23, respectively.

## Description

### BACKGROUND OF THE INVENTION

### Field of The Invention

The present invention generally relates to a computing system serving as an information processing apparatus. More specifically, the invention relates to an everyday language-based computing system and method for understanding the meaning of a language (everyday language), which is usually used by humans, to execute and manage all information processing by an everyday language. Throughout the specification, the term "everyday language" is used to be distinguished from the term "natural language" that expresses human's words, which is in turn to be opposed to the term "artificial language," such as a programming language. In addition, the concept of the term "everyday language" does not only include a common language, but it also includes a regional dialect which is usually used by people, wording which varies in accordance with age and irrespective of sex, and an individual unique wording; and it expresses words which are widely used as everyday words. Moreover, the term "language computer" is a computing environment which includes a meaning processing mechanism for everyday language and which is mainly realized as software on the existing computer hardware so as to be adapted to carry out the management and processing of all information on a computer on the basis of a language.

### Description of The Related Art

In recent years, with the rapid development of information processing technology and communication technology, computers have been used everywhere, such as in companies and homes. In such an advanced information-oriented society, it is pointed out as one problem that information technology differentials between persons who can use computers and persons who cannot use computers are increasing more and more, so that it is being strongly requested to provide a simple operating procedure for general users who do not have much expertise about computers and so forth.

Therefore, the improvement and reinforcement of interface have been carried out in order to improve user's operating procedures. As part thereof, computers for utilizing speech recognition technology to replace user's conversation with characters or for operating a part of the functions of the computers on the basis of user's conversation begin to appear.

The above described conventional computers can apparently receive user's conversation. However, information processing carried out in the conventional computers is merely arithmetic processing based on numerical values and symbols, and the conventional computers do not understand the meaning of user's conversation to carry out information processing. Therefore, there is a problem in that users who utilize such computers still have to operate computers after accurately understanding the contents and operations of information processing carried out by the computer, so that it is still difficult for general users, who do not have much expertise about computers and so forth, to use the computers.

### SUMMARY OF THE INVENTION

It is therefore an object of the present invention to eliminate the aforementioned problems and to provide an everyday language-based computing system and method which are adapted to be easily operated by a language (everyday language) usually used by a user who does not have much expertise about computers and so forth, and which are adapted to flexibly and precisely grasp user's intention to process information.

According to the present invention, the aforementioned and other objects are accomplished by intending to carry out a paradigm shift from conventional information processing (computing) based on numerical values and symbols, to information processing (human brain type computing) based on a language, in view of the fact that information processing in human brains is supported by a language.

Therefore, the present invention provides a mechanism for understanding the meaning of a language (everyday language), which is usually used by humans, to execute and manage all information processing by an everyday language.

Specifically, in order to accomplish the aforementioned and other objects, according to a first aspect of the present invention, there is provided an everyday language-based computing system comprising a language computer for processing a language text described or dictated by an everyday language, the language computer having a semiotic base, in which the system of meanings of the everyday language is structured, and a meaning processing mechanism for understanding the meaning of a language text and generating a language text on the basis of the semiotic base.

In the everyday language-based computing system according to the first aspect, the semiotic base of the language computer preferably has an electronic dictionary for holding a plurality of dictionary items including lexico-grammatical information and semantic information, a lexico-grammar base for systematically holding a plurality of lexico-grammatical features of language and a plurality of semantic roles corresponding thereto, and a meaning base for systematically holding a plurality of semantic features of language and a plurality of semantic roles corresponding thereto. The lexico-grammatical features held in the lexico-grammar base and the semantic features held in the meaning base are associated with the lexico-grammatical information and semantic information of each of the dictionary items held in the electronic dictionary, respectively. In this case, the meaning processing mechanism of the language computer refers to the electronic dictionary, the lexico-grammar base and the meaning base, to identify a semantic role corresponding to a lexico-grammatical feature of a character string which is included in a language text serving as an object to be processed, and to identify a semantic feature corresponding to the identified semantic role, so that the meaning processing mechanism understands the meaning of the language text on the basis of the identified semantic feature.

In addition, the semiotic base of the language computer preferably further includes a situation base for systematically holding a plurality of situation types indicative of a situation, in which the language is used, and a plurality of situation features corresponding thereto. Both of the lexico-grammar base and the meaning base holds a plurality of registers of a language, which are associated with the situation types held in the situation base. In this case, the meaning processing mechanism of the language computer refers to the meaning base, the lexico-grammar base and the situation base, to identify a situation type corresponding to a register of a lexico-grammatical feature of a character string which is included in a language text serving as an object to be processed, to identify a register of a semantic feature corresponding to the identified situation type, and to identify a semantic feature corresponding to the identified semantic role in the identified register of semantic feature, so that the meaning processing mechanism understands the meaning of the language text on the basis of the identified semantic feature.

Moreover, the semiotic base of the language computer preferably further includes a corpus for holding a plurality of language texts serving as examples of exchange of a language, together with a plurality of semantic features of a language. In this case, the meaning processing mechanism of the language computer refers to the corpus, to retrieve an example of a language text, which is analogous to a language text serving as an object to be processed, so that the meaning processing mechanism understands the meaning of the language text on the basis of a semantic feature of the retrieved example of the language text.

In addition, in the everyday language-based computing system according to the first aspect, the semiotic base of the language computer preferably has a situation base for systematically holding a plurality of situation types indicative of a situation, in which the language is used, and a plurality of situation features corresponding thereto, a meaning base for systematically holding a plurality of semantic features of a language and a plurality of semantic roles corresponding thereto, and a corpus for holding a plurality of language texts serving as examples of exchange of a language, together with the situation features and semantic features of a language. The situation base further holds a plurality of generic structures of text corresponding to the situation types. The meaning base further holds a plurality of registers of a language, which are associated with the situation types held in the situation base, and a plurality of global plan templates which are associated with the generic structure of text held in the situation base. In this case, the meaning processing mechanism of the language computer refers to the situation base and the meaning base, to identify a global plan template, which is relevant to a generic structure of text corresponding to a situation type during generation of a language text, and to prepare a local plan on the basis of the identified global plan template and of a predefined semantic feature, so that the meaning processing mechanism generates a language text on the basis of the prepared local plan and the examples of the language texts held in the corpus.

In addition, the semiotic base of the language computer preferably further includes a lexico-grammar base for systematically holding a plurality of lexico-grammatical features of a language and a plurality of semantic roles corresponding thereto. The lexico-grammar base holds a plurality of registers of a language, which are associated with the situation type held in the situation base. The corpus holds a plurality of language texts serving as examples of exchange of a language, together with the situation features, semantic feature and lexico-grammatical features of a language. In this case, the meaning processing mechanism of the language computer refers to the meaning base to identify a semantic role corresponding to a semantic feature included in the local plan, and refers to the lexico-grammar base, to identify a register of a lexico-grammatical feature corresponding to a situation type during generation of a language text, and to identify a lexico-grammatical feature corresponding to the identified semantic role within the register of the identified lexico-grammatical feature, so that the meaning processing mechanism generates a language text on the basis of the identified lexico-grammatical feature, the local plan and the examples of the language texts held in the corpus.

Moreover, the semiotic base of the language computer preferably further includes an electronic dictionary for holding a plurality of dictionary items including lexico-grammatical information and semantic information. The lexico-grammatical features held in the lexico-grammar base and the semantic features held in the meaning base are associated with the lexico-grammatical information and the semantic information of each of the dictionary items held in the electronic dictionary, respectively. In this case, the meaning processing mechanism of the language computer refers to the electronic dictionary to output a dictionary item including the semantic feature included in the local plan and the identified lexico-grammatical feature, and refers to the lexico-grammar base to combine the identified lexico-grammatical feature with the outputted dictionary item, so that the meaning processing mechanism generats a language text.

Moreover, in the everyday language-based computing system according to the first aspect, the language operating system preferably has a secretary agent for interactively exchanging a language text between a user and the language computer. Preferably, the secretary agent is prepared as a plurality of candidates of secretary agents every specialized domain, and a desired candidate of secretary agent is selected by an instruction from the user. The language operating system preferably further includes a knowledge base which is managed by the secretary agent. The knowledge base is preferably associated with the semiotic base of the language computer. Moreover, the language operating system has a user interface for personifying the secretary agent to present the personified secretary agent together with a virtual space which is prepared by simulating a user's accommodation space. The user interface is preferably set in a desired form by an instruction from the user.

In addition, in the everyday language-based computing system according to the first aspect, the language operating system preferably manages a process relating to a processing of a language text on the language computer, and/or a language file including a language text. In addition, the language operating system preferably exchanges language data from and to another everyday language-based computing system. The language data preferably include language text data and data indicative of the meaning thereof.

Furthermore, in the everyday language-based computing system according to the first aspect, the language computer is preferably a virtual machine which is realized on the existing platform. In addition, the language computer preferably further includes a language resource for providing various services by an instruction from the language operating system, the language resource having a resource body operated on the existing platform, and a language interface for connecting the resource body to a command based on a language of the language operating system.

According to a second aspect of the present invention, there is provided an everyday language-based computing system comprising: a client computing system; and a network computing system connected to the client computing system. The client computing system includes a client language computer for processing a language text described or dictated by an everyday language, and a client-oriented language operating system for managing the client language computer by the everyday language. The network computing system includes a network language computer for processing a language text which is exchanged from and to the client computing system, and a network-oriented language operating system for exchanging language data from and to the client computing system and for managing the network language computer by the everyday language. The client-oriented language operating system and the network-oriented language operating system exchanging language data therebetween in accordance with a language communication protocol. The language data exchanged in accordance with the language communication protocol preferably include language text data and data indicative of the meaning thereof.

In the everyday language-based computing system according to the second aspect, the client language computer preferably includes a client semiotic base provided by structuring the system of meanings of the everyday language, and a client meaning processing mechanism for understanding the meaning of a language text and generating a language text on the basis of the client semiotic base. The network language computer includes a network semiotic base provided by structuring the system of meanings of the everyday language, and a network meaning processing mechanism for understanding the meaning of a language text and generating a language text on the basis of the network semiotic base. The client semiotic base and the network semiotic base are associated with each other under the control of the client-oriented language operating system and the network-oriented language operating system.

In addition, in the everyday language-based computing system according to the second aspect, the client-oriented language operating system preferably has a secretary agent for interactively exchanging a language text between a user and the client language computer, and the network-oriented language operating system has a network manager agent for exchanging a language text from and to the secretary agent and for managing the network language computer.

Moreover, in the everyday language-based computing system according to the second aspect, the client-oriented language operating system preferably further includes a client knowledge base which is managed by the secretary agent. The network-oriented language operating system further includies a network knowledge base which is managed by the network manager agent. The client knowledge base and the network knowledge base are associated with each other under the control of the secretary agent and the network manager agent.

Moreover, in the everyday language-based computing system according to the second aspect, the network-oriented language operating system preferably manages a process relating to a processing of a language text which is exchanged from and to the client computing system, and/or a language file including a language text which is exchanged from and to the client computing system.

According to a third aspect of the present invention, there is provided an everyday language computing method of processing a language text described or dictated by an everyday language to understand the meaning of a language text, by referring to a semiotic base. The semiotic base includes an electronic dictionary for holding a plurality of dictionary items including lexico-grammatical information and semantic information, a lexico-grammar base for systematically holding a plurality of lexico-grammatical features of a language and a plurality of semantic roles corresponding thereto, and a semantic base for systematically holding a plurality of semantic features of a language and a pluratity of semantic roles corresponding thereto. The lexico-grammatical features held in the lexico-grammatical base and the semantic features held in the meaning base are associated with the lexico-grammatical information and the semantic information of each of the dictionary items held in the electronic dictionary, respectively. The everyday language computing method comprises the steps of: referring to the electronic dictionary to carry out a morphological analysis and a parsing to identify a lexico-grammatical feature of a character string which is included in a language text serving as an object to be processed; referring to the lexico-grammar base to identify a semantic role corresponding to the identified lexico-grammatical feature; referring to the electronic dictionary to output a dictionary item including the identified lexico-grammatical feature; referring to the semantic base to extract semantic information which is included in the outputted dictionary item; and identifying a semantic feature corresponding to the identified semantic role to understand the meaning of the language text, on the basis of the extracted semantic information.

In the everyday language computing method according to the third aspect, the semiotic base preferably further includes a situation base for systematically holding a plurality of situation types indicative of a situation, in which a language is used, and a plurality of situation features corresponding thereto. Both of the lexico-grammar base and the meaning base holds a plurality of registers of a language, which are associated with the situation types held in the situation base. The everyday language computing method further comprises the steps of: referring to the situation base and the lexico-grammar base to identify a situation type corresponding to a register of a lexico-grammatical feature of a character string which is included in a language text serving as an object to be processed; and referring to the situation base and the meaning base to identify a register of a semantic feature corresponding to the identified situation type, wherein a semantic feature corresponding to the identified semantic role is identified to understand the meaning of the language text within the register of the identified semantic feature.

According to a fourth aspect of the present invention, there is provided an everyday language computing system of generating a language text described or dictated by an everyday language, by referring to a semiotic base. The semiotic base includes a situation base for systematically holding a plurality of situation types indicative of a situation, in which a language is used, and a plurality of situation features corresponding thereto, a meaning base for systematically holding a plurality of semantic features of a language and a plurality of semantic roles corresponding thereto, and a corpus for holding a plurality of language texts serving as examples of exchange of a language, together with the situation feature and semantic feature of a language. The situation base further holds a plurality of generic structures of text corresponding to the situation types. The meaning base further holds a plurality of registers of a language, which are associated with the situation type held in the situation base, and a plurality of global plan templates which are associated with the generic structure of text held in the situation base. The everyday language computing method comprises the steps of: referring to the situation base and the meaning base to identify a global plan template which is relevant to a generic structure of text corresponding to a situation type during generation of a language text; referring to the meaning base to prepare a local plan on the basis of the identified global plan template and a predefined semantic feature; and generating a language text on the basis of the prepared local plan and the examples of the language texts held in the corpus.

In the everyday language computing method according to the fourth aspect, the semiotic base preferably further includes a lexico-grammar base for systematically holding a plurality of lexico-grammatical features of a language and a plurality of semantic roles corresponding thereto. The lexico-grammar base holds a plurality of registers of a language, which are associated with the situation types held in the situation base. The corpus holds a plurality of language texts serving as examples of exchange of a language, together with the situation feature, semantic feature and lexico-grammatical feature of a language. The everyday language computing method further comprises the steps of: referring to the lexico-grammar base to identify a register of a lexico-grammatical feature corresponding to a situation type during generation of a language text; referring to the semantic base to identify a semantic role corresponding to a semantic feature which is included in the local plan; and referring to the lexico-grammatical base to identify a lexico-grammatical feature corresponding to the identified semantic role within the identified register of the lexico-grammatical feature, wherein a language text is generated on the basis of the identified lexico-grammatical feature, the local plan, and the examples of the language texts held in the corpus.

In addition, the semiotic base preferably further includes an electronic dictionary for holding a plurality of dictionary items including lexico-grammatical information and semantic information. The lexico-grammatical features held in the lexico-grammar base and the semantic features held in the meaning base are associated with the lexico-grammatical information and the semantic information of each of the dictionary items held in the electronic dictionary, respectively. The everyday language computing method further comprises the steps of: referring to the electronic dictionary to output a dictionary item including the semantic feature, which is included in the local plan, and the identified lexico-grammatical feature; and referring to the lexico-grammar base to combine the identified lexico-grammatical feature with the outputted dictionary item, wherein a language text is generated by the combination of the identified lexico-grammatical feature with the outputted dictionary item.

Thus, according to the present invention, since the semiotic base prepared by structuring the system of meanings of the everyday language is used for understanding the meaning of the language text and generating the language text by means of the meaning processing mechanism, all information processing can be executed and managed by the everyday language. Therefore, even if the client does not have expertise about computers and so forth, it is possible to easily operate the system by a language (everyday language) which is usually used by the client, and it is possible to flexibly and precisely grasp a client's intention to process information.

In addition, according to the present invention, since the language operating system carries out the management of a process relating to the processing of the language text on the language computer, the management of the language file including the language text, and the management of a language protocol communication on the network, on the basis of the language, various management operations relating to information processing can be intuitively carried out in the level of the language text.

Moreover, according to the present invention, since the existing resources (including application software and so fourth) are provided with a language interface, the system can be accessed and utilized on the basis of all of languages, such as programming languages, application software, files, data bases and contents of web information, which are required for processing information by computers.

Thus, it is possible to provide a completely personalized computer, and it is possible to freely operate the computer as if the user operates a telephone or a television and as if the user uses a secretary through user's own words, so that problems on information technology differentials can be fundamentally solved.

### BRIEF DESCRIPTION OF THE DRAWINGS

The present invention will be understood more fully from the detailed description given herebelow and from the accompanying drawings of the preferred embodiments of the invention. However, the drawings are not intended to imply limitation of the invention to a specific embodiment, but are for explanation and understanding only.

In the drawings:
FIG. 1 is a diagram showing a preferred embodiment of an everyday language-based computing system according to the present invention;
FIG. 2 is a flow chart for explaining an example (the use of application software) of information processing which uses the everyday language-based computing system shown in FIG. 1;
FIG. 3 is a flow chart for explaining an example (information retrieval) of information processing which uses the everyday language-based computing system shown in FIG. 1;
FIG. 4 is a flow chart for explaining an example (the use of a processing agent) of information processing which uses the everyday language-based computing system shown in FIG. 1;
FIG. 5 is an illustration for explaining an example of a user interface which is presented- to a client by a client-oriented language computing system of the everyday language-based computing system shown in FIG. 1;
FIG. 6 is a diagram for explaining a semiotic base which is used by a language computer of the everyday language-based computing system shown in FIG. 1;
FIGs. 7A through 7G are tables showing examples of information which is included in an electronic dictionary of the semiotic base shown in FIG. 6;
FIG. 8 is a diagram for explaining information which is included in a lexico-grammar base of the semiotic base shown in FIG. 6;
FIG. 9 is a diagram for explaining information which is included in a meaning base of the semiotic base shown in FIG. 6;
FIG. 10 is a table showing an example of a global plan template which is included in a meaning base of the semiotic base shown in FIG. 6;
FIG. 11 is a table showing an example of a local plan which is prepared on the basis of the global plan template shown in FIG. 10;
FIG. 12 is a diagram for explaining information which is included in a situation base of the semiotic base shown in FIG. 6;
FIG. 13 is a diagram for explaining an association between a situation base, a meaning base and a lexico-grammar base in the semiotic base shown in FIG. 6;
FIG. 14 is a diagram showing an example of a generic structure of text which is included in a situation base of the semiotic base shown in FIG. 6;
FIGs. 15A and 15B are tables for explaining information which is included in a corpus of the semiotic base shown in FIG. 6;
FIG. 16 is a flow chart for explaining an example of understanding of the meaning of a language text on the side of a client-oriented language computing system in the everyday language-based computing system shown in FIG. 1;
FIG. 17 is a flow chart for explaining another example of understanding of the meaning of a language text on the basis of a client-oriented language computing system in the everyday language-based computing system shown in FIG. 1;
FIG. 18 is a diagram for explaining information on a lexico-grammar base which is used during understanding of the meaning of the language text shown in FIG. 17;
FIG. 19 is a table showing an example of a language text information which is prepared in the middle of understanding of the meaning of the language text shown in FIG. 17;
FIG. 20 is a diagram for explaining information on a meaning base which is used during understanding of the language text shown in FIG. 17;
FIG. 21 is a table showing an example of a language text information which is finally prepared in understanding of the meaning of the language text shown in FIG. 17;
FIG. 22 is a flow chart for explaining an example of generation of a language text on the side of a client-oriented language computing system in the everyday language-based computing system shown in FIG. 1;
FIG. 23 is a flow chart for explaining another example of generation of a language text on the side of a client-oriented language computing system in the everyday language-based computing system shown in FIG. 1;
FIG. 24 is a flow chart for explaining a further example of generation of a language text on the side of a client-oriented language computing system in the everyday language-based computing system shown in FIG. 1;
FIG. 25 is a diagram for explaining information on a meaning base which is used during generation of the language text shown in FIGS. 23 and 24;
FIG. 26 is a diagram for explaining information on a meaning base which is used during generation of the language text shown in FIGS. 23 and 24;
FIG. 27 is a table showing an example of a language text information which is obtained in a process for generating the language text shown in FIGS. 22 through 24;
FIG. 28 is a table showing an example of a language text information which is finally prepared in production of the language text shown in FIGS. 22 through 24;
FIG. 29 is a diagram for explaining a language application which is provided by a language computer of the everyday language-based computing system shown in FIG. 1;
FIG. 30 is a schematic diagram for explaining a language process management in a network-oriented language operating system of the everyday language-based computing system shown in FIG. 1;
FIG. 31 is a table showing an example of a data specification of language data which are exchanged in accordance with a language communication protocol between a client-oriented language computing system and a network-oriented language computing system in the everyday language-based computing system shown in FIG. 1;
FIG. 32 is a diagram for explaining the state of linkage of a semiotic base between a client-oriented language computing system and a network-oriented language computing system in the everyday language-based computing system shown in FIG. 32;
FIG. 33 is a flow chart for explaining an example of understanding of the meaning of a language text on the side of a network-oriented language computing system in the everyday language-based computing system shown in FIG. 1;
FIG. 34 is a flow chart for explaining an example of generation of a language text on the side of a network-oriented language computing system in the everyday language-based computing system shown in FIG. 1;
FIG. 35 is a block diagram showing a hardware configuration of a computer to which the everyday language-based computing system shown in FIG. 1 is applied; and
FIG. 36 is a diagram for explaining a hierarchical structure of a communication protocol.

### DESCRIPTION OF THE PREFERRED EMBODIMENTS

Referring now to the accompanying drawings, the preferred embodiments of the present invention will be described below.

### [1 Outline of Everyday Language-Based Computing System]

### [1.1 Whole Configuration]

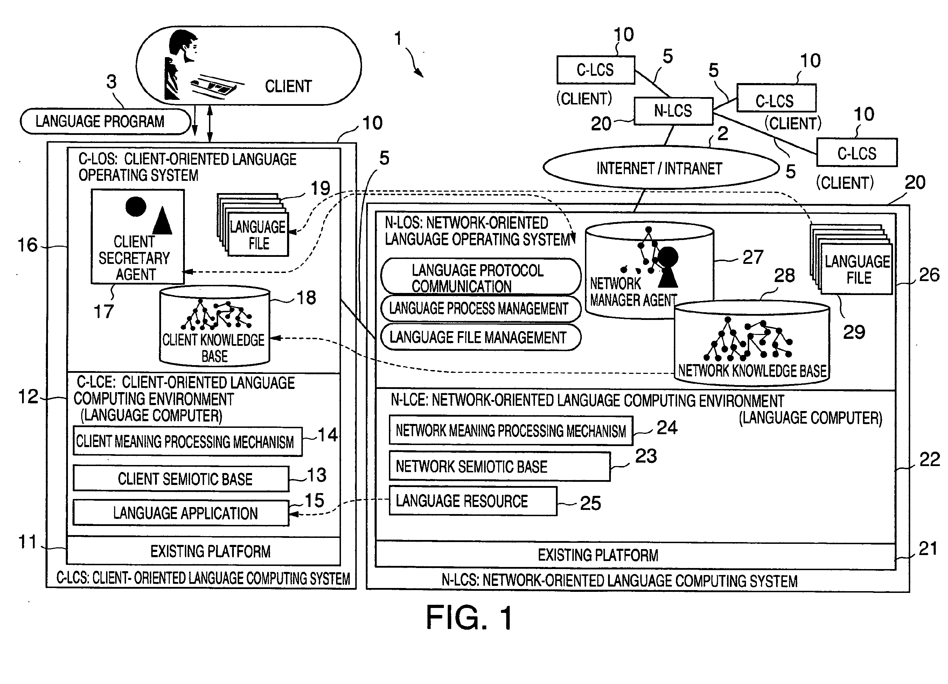

First, referring to FIG. 1, the whole configuration of a preferred embodiment of an everyday language-based computing system according to the present invention will be described below.

As shown in FIG. 1, the everyday language-based computing system 1 comprises a client-oriented language computing system (C-LCS) 10 serving as a computer terminal, and a plurality of network-oriented language computing systems (N-LCS) 20 which are connected to the client-oriented language computing system 10 via a communication line 5 and so forth. Furthermore, the plurality of network-oriented language computing systems 20 are provided on a network 2, such as Internet or Intranet.

The client-oriented language computing system 10 has a client-oriented language computing environment (C-LCE) 12 (which will be hereinafter referred to as a "client language computer") for processing a language text described or dictated by an everyday language, and a client-oriented language operating system (C-LOS) 16 for managing the client language computer 12 by the everyday language. The network-oriented language computing system 20 has a network-oriented language computing environment (N-LCE) 22 (which will be hereinafter referred to as a "network language computer") for processing a language text which is exchanged from and to the client-oriented language computing system 10, and a network-oriented language operating system (N-LOS) 26 for exchanging language data exchanged from and to the client-oriented language computing system 10 and for managing the network language computer 22 by the everyday language.

The client-oriented language operating system 16 is designed to manage all of jobs which are necessary for computing in the client-oriented language computing system 10. The client-oriented language operating system 16 has a client secretary agent 17 for interactively exchanging a language text between a client (user) and the client language computer 12, and a client knowledge base 18 which is managed by the client secretary agent 17. Furthermore, in the client-oriented language operating system 16, the language text is managed as a language file 18.

The client language computer 12 has a client semiotic base 13 which is obtained by structuring the system of meanings of the everyday language, and a client meaning processing mechanism 14 for understanding the meaning of the language text and generating the language text on the basis of the client semiotic base 13. The client language computer 12 has a language application 15 for providing various services on the basis of instructions from the client-oriented language operating system 16. Furthermore, the client language computer 12 is a virtual machine realized on the existing platform 11 which comprises the existing hardware and operating system, and is designed to execute and manage all inputs/outputs and information processing in the client language computer 12 by the everyday language.

The network-oriented language operating system 26 is designed to manage all of jobs which are necessary for computing in the network computing system 20. The network-oriented language operating system 26 has a network manager agent 27 for exchanging the language text from and to the client secretary agent 17 and for managing the network language computer 22, and a network knowledge base 28 which is managed by the network manager agent 27. Furthermore, in the network-oriented language operating system 26, the language text is managed as a language file 29.

The network language computer 22 has a network semiotic base 23 which is obtained by structuring the system of meanings of the everyday language, and a network meaning processing mechanism 24 for understanding the meaning of the language text and generating the language text on the basis of the network semiotic base 23. The network language computer 22 has a language resource 25 for providing various services on the basis of instructions from the network-oriented language operating system 16. Furthermore, similarly the client language computer 12, the network language computer 22 is a virtual machine which is realized on the existing platform 21 comprising the existing hardware and operating system, and is designed to execute and manage all inputs/outputs and information processing in the network language computer 22 by the everyday language.

Furthermore, the client-oriented language operating system 16 and the network-oriented language operating system 26 are designed to exchange language data therebetween in accordance with a language communication protocol via the network 2. The client secretary agent 17 and the network manager agent 27 are designed to be linked to each other. In addition, the client knowledge base 18 and the network knowledge base 28 are designed to be linked to each other under the control of the client secretary agent 17 and the network manager agent 27. Moreover, the client semiotic base 13 and the network semiotic base 23 are designed to be linked to each other under the control of the client language-base operating system 16 and the network-oriented language operating system 26.

### [1.2 Examples of Operation]

Examples of operations of the above described everyday language-based computing system 1 will be described below.

In the everyday language-based computing system 1 shown in FIG. 1, a client describes or dictates a request to solve a problem, the procedure for solving the problem, instructions to carry out work, and so forth, by an everyday language as a language text, and requests of the client-oriented language computing system 10 that it executes information processing.

The information processing carried out at the client's request is information processing which is generally carried out in personal computers, Internet and so forth, and specifically, is as follows:
(a) collection of daily information, a reservation for a ticket, schedule management, preparation and management of a document;
(b) preparation and transmission of an e-mail, sorting of received e-mails, and abstracting of the contents thereof;
(c) consultation and learning;
(d) information retrieval and inquiry in the contents of web information on Internet;
(e) computing using a programming language and application software;
(f) electronic commercial transaction, banking and investment on Internet;
(g) professional jobs, such as decision making, planning and management;
(h) control and management of hardware apparatuses, such as domestic electrical appliances, robots and factory's plants; and
(i) other information processing using various functions of computers and Internet.

Such a client's request for information processing is inputted to the client-oriented language computing system 10 as, e.g., a language program 3. Furthermore, the language program 3 may be described on a file or the like, or dictated.

In the client-oriented language computing system 10, the language program 3 is accepted by the client secretary agent 17 of the client-oriented language operating system 16, and the language program 3 is executed on the client language computer 12 via the client secretary agent 17. If necessary, the client secretary agent 17 requests of the network manager agent 27 of the network-oriented language computing system 20 that it executes the language program 3. In this case, the language program 3 is executed on the network language computer 22 of the network-oriented language computing system 20. Furthermore, in the client language computer 12 and the network language computer 22, the meaning of a language text included in the language program 3 is understood, and the language text is finally converted or compiled into a format, which is executable on the existing platforms 11 and 21, to carry out desired information processing. The results of execution of the language program 3 in the client language computer 12 and network language computer 22 are reported to the client via the client secretary agent 17.

Furthermore, information processing in the client language computer 12 and network language computer 22 includes information processing, most of which is carried out by the client secretary agent 17, and information processing which is mainly carried out by the client. In accordance with the kind thereof, the procedure for processing information varies.

Three typical examples of information processing operations of the everyday language-based computing system 1 shown in FIG. 1 will be described below.

### <Operation Example 1>

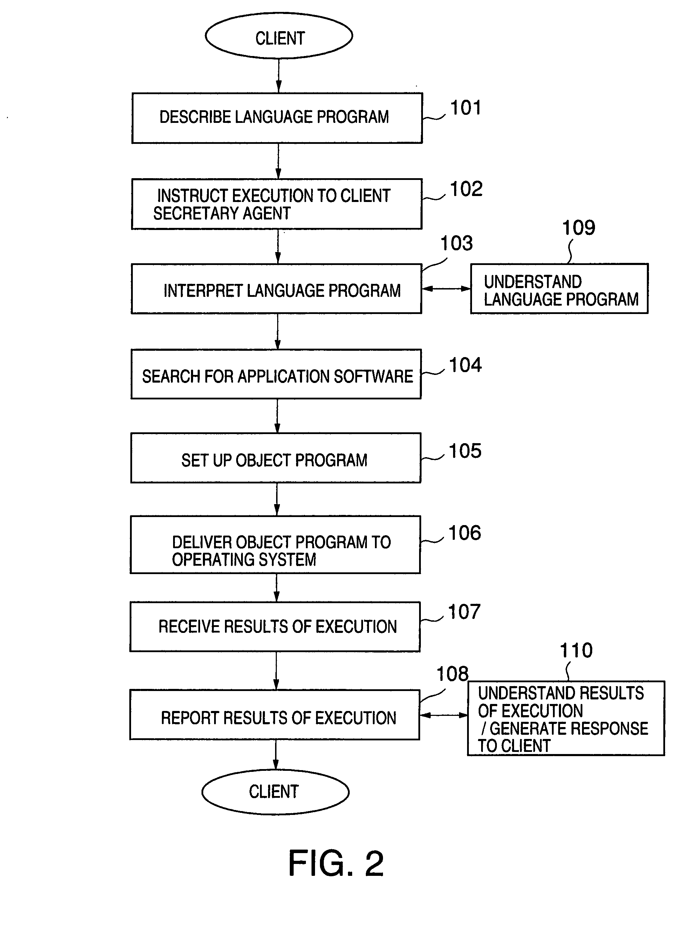

First, referring to FIG. 2, an example of an operation for executing a predetermined calculation utilizing application software in the everyday language-based computing system shown in FIG. 1 will be described below.

As shown in FIG. 2, first, a client describes the kind of calculation, input data, a request for calculation and so forth as a language program (step 101), and then, calls the client secretary agent 17 of the client-oriented language operating system 16 to instruct the execution of the language program (step 102).

The client secretary agent 17 interprets the language program by means of the client language computer 12 (step 103). Furthermore, at this time, the client secretary agent 17 starts the client meaning processing mechanism 14 of the client language computer 12 in accordance with a language program meaning understanding routine, and understands the meaning of the language program by means of the client semiotic base 13 (step 109).

Then, the client secretary agent 17 searches for required application software to arrange input data which are instructed by the client, and prepares for execution of calculation (step 104).

The application software accepts the request for calculation from the client secretary agent 17, and sets up an object program of an execute form (step 105). Then, the application software delivers the object program to the operating system (the existing plat form 11) (step 106).

Finally, the client secretary agent 17 receives the results of execution from the operating system (the existing platform 11) (step 107), and reports the results of execution to the client (step 108). Furthermore, at this time, the client secretary agent 17 starts the client meaning processing mechanism 14 of the client language computer 12 in accordance with a client response generating routine to understand the meaning of the results of execution by means of the client semiotic base 13, and generates a language text indicative of the summary of the results of execution to report the summary, together with the results of execution, to the client (step 110).

### <Operation Example 2>

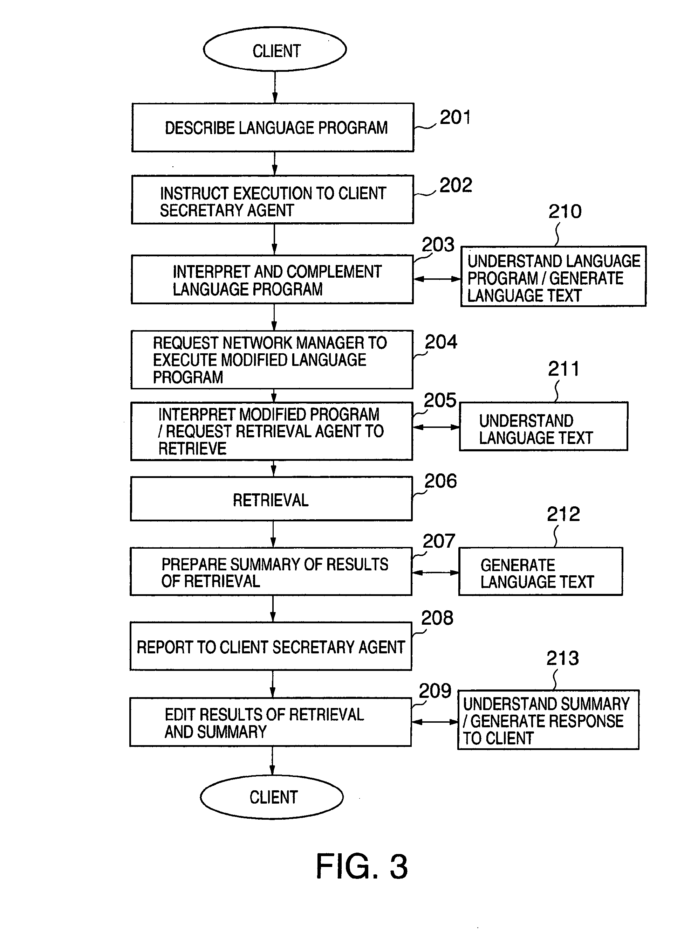

Referring to FIG. 3, an example of an operation for carrying out information retrieval on the network in the everyday language-based computing system shown in FIG. 1 will be described below.

As shown in FIG. 3, first, a client describes the kind of information to be collected, and comments as a language program (step 201), and then, calls the client secretary agent 17 of the client-oriented language operating system 16 to instruct the execution of the language program (step 202).

The client secretary agent 17 interprets the language program by means of the client language computer 12, and then, complements the language program so that the network manager agent 27 of the network-oriented language computing system 20 can understand the language program (step 203). Furthermore, at this time, the client secretary agent 17 starts the client meaning processing mechanism 14 of the client language computer 12 in accordance with a language program meaning understanding routine, and understands the meaning of the language program by means of the client semiotic base 13. In addition, the client secretary agent 17 starts the client meaning processing mechanism 14 of the client language computer in accordance with a text generating routine, and generates a language text for complementing the language program by means of the client semiotic base 13 (step 210).

Then, the client secretary agent 17 calls the network manager agent 27 of the network-oriented language computing system 20, and requests to execute the modified language program (step 204).

The network manager agent 27 interprets the modified language program by means of the network language computer 22, and calls an appropriate retrieval agent to make a request for retrieval (step 205). Furthermore, at this time, the network manager agent 27 starts the network meaning processing mechanism 24 of the network language computer 22 in accordance with a language program meaning understanding routine, and understands the meaning of the modified language program by means of the network semiotic base 23 (step 211).

The retrieval agent executes retrieval (step 206).

Thereafter, the network manager agent 27 receives the results of retrieval from the retrieval agent to prepare a summary of the results of retrieval (step 207). Furthermore, at this time, the network manager agent 27 starts the network meaning processing mechanism 24 of the network language computer 22 in accordance with a test generating routine, and generates a language text indicative of the summary of the results of retrieval by means of the network semiotic base 23 (step 212).

Then, the network manager agent 27 reports the summary, together with the collected information, to the client secretary agent 17 (step 208).

Finally, the client secretary agent 17 receives the results of retrieval and the summary thereof from the network manager agent 27, and edits collected information in accordance with the summary to report it to the client (step 209). Furthermore, at this time, the client secretary agent 17 starts the client meaning processing mechanism 14 of the client language computer 12 in accordance with a client response generating routine to understand the meaning of the results of retrieval by means of the client semiotic base 13, and generates a language text indicative of the edited collected information (step 213).

### <Operation Example 3>

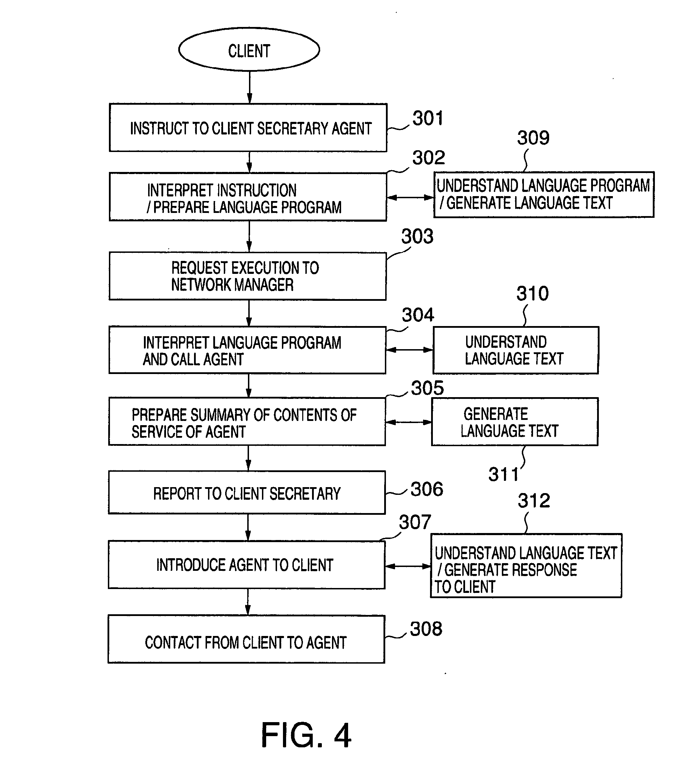

Referring to FIG. 4, an example of an operation for utilizing a processing agent (consulting, travel agency, store, etc.) on the network in the everyday language-based computing system shown in FIG. 1 will be described below.

As shown in FIG. 4, first, a client calls the client secretary agent 17 of the client-oriented language operating system 16 to instruct an objective and the kind of a required processing agent (step 301).

The client secretary agent 17 interprets client's instructions by means of the client language computer 12, and then, prepares a language program (step 302). Furthermore, at this time, the client secretary agent 17 starts the client meaning processing mechanism 14 of the client language computer 12 in accordance with a language program meaning understanding routine, and understands the meaning of the client's instructions by means of the client semiotic base 13. In addition, the client secretary agent 17 starts the client meaning processing mechanism 14 of the client language computer in accordance with a text generating routine, and generates a language program (language text) for realizing the client's instructions by means of the client semiotic base 13 (step 309).

Then, the client secretary agent 17 calls the network manager agent 27 of the network-oriented language computing system 20, and requests to execute the prepared language program (step 303).

The network manager agent 27 interprets the language program by means of the network language computer 22, and calls a processing agent which is giving a desired service (step 305). Furthermore, at this time, the network manager agent 27 starts the network meaning processing mechanism 24 of the network language computer 22 in accordance with a language program meaning understanding routine, and understands the meaning of the language program by means of the network semiotic base 23 (step 310).

Thereafter, the network manager agent 27 examines the contents of the service of the processing agent to prepare a summary of the contents of the service of the processing agent (step 305). Furthermore, at this time, the network manager agent 27 starts the network meaning processing mechanism 24 of the network language computer 22 in accordance with a test generating routine, and generates a language text indicative of the summary of the contents of the service by means of the network semiotic base 23 (step 311).

Then, the network manager agent 17 reports the summary of the contents of the service to the client secretary agent 17 (step 306).

Finally, the client secretary agent 17 receives the summary of the contents of the service from the network manager agent 27, and understands it to introduce an appropriate processing agent to the client (step 307). Furthermore, at this time, the client secretary agent 17 starts the client meaning processing mechanism 14 of the client language computer 12 in accordance with a client response generating routine to understand the meaning of the summary of the contents of the service by means of the client semiotic base 13, and generates a language text indicative of information on the processing agent (step 312).

Thereafter, the client contacts the reported processing agent (step 308).

The details of the above described everyday language-based computing system 1 will be divided into the client-oriented language computing system 10 and the network-oriented language computing system 20 to be described below.

### [2 Client-oriented language Computing System]

### [2.1 Client-oriented language Operating System]

### [2.1.1 Outline]

In the client-oriented language computing system 10 shown in FIG. 1, the client-oriented language operating system 16 has the client secretary agent 17 for interactively exchanging a language text between the client and the client language computer 12, and is designed to manage a process for the processing of the language text on the client language computer 12 and to manage a language file 19 including the language text.

Specifically, the client secretary agent 17 of the client-oriented language operating system 16 is designed to understand the meaning of a client's request to schedule a process for the processing of the language text to execute the client's request. In addition, the client secretary agent 17 is designed to prepare and manage the language file 19 by client's instructions or spontaneously. The language file means a personal file of the client or the client secretary agent 17, and includes a language title and a summary. The language file is prepared and managed by the everyday language. Furthermore, the contents of the language file can be verified by means of the client secretary agent 17, and the client can directly access to the language file to verify its contents. The language files include a language file which is prepared by the client secretary agent on the basis of client's instructions, a language file which is spontaneously prepared by the client secretary agent 17 so as to comply with client's request, and a language file which is prepared for the client by customizing a part of a common file managed by the network-oriented language operating system 26.

In addition, the client-oriented language operating system 16 is designed to exchange language data in accordance with a language communication protocol from and to the network-oriented language operating system 26, to cause the client secretary agent 17 and the network manager agent 27 to be associated with each other, and to cause the client knowledge base 18 and the network knowledge base 28 to be associated with each other under the control of the client secretary agent 17 and the network manager agent 27.

Moreover, the client-oriented language operating system 16 is designed to exchange language data in accordance with a language communication protocol from and to the network-oriented language operating system 26, to cause the client semiotic base 13 and the network semiotic base 23 to be associated with each other, and to replace a language system resource, which is necessary when the client secretary agent 17 understands the meaning of the language text and generates the language text, from the network semiotic base 23 with respect to language system resources which are stored in the client semiotic base 13 of the client language computer 12.

### [2.1.2 User Interface]

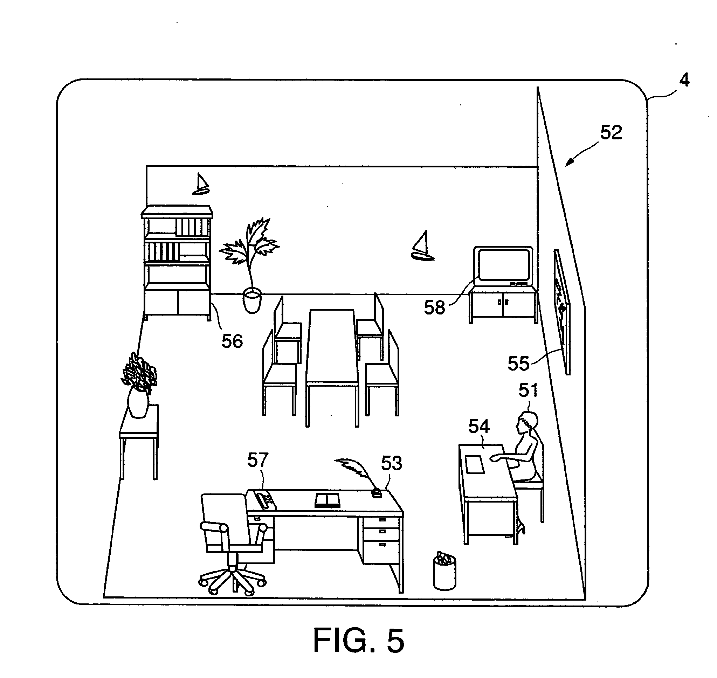

FIG. 5 is an illustration for explaining an example of a user interface which is presented to a client by the client-oriented language operating system 16.

As shown in FIG. 5, on a display of the client-oriented language computing system 10, a secretary icon 51 which is prepared by personifying the client secretary agent 17, and a client office 52 serving as a virtual space which is prepared by three-dimensionally simulating a client's accommodation space (living room or office), are displayed as a screen 4, so that the client-oriented language computing system 10 can be operated by interaction or the like (exchanging of the language text) between the client and the secretary icon 51 (the client secretary agent 17).

The user interface shown in FIG. 5 is designed to be set in a desired form by client's instructions.

Specifically, the client office 52 displayed on the screen 4 has some standard patterns, and alterations can be carried out in accordance with client preference by suitably changing the respective standard patterns by means of an office changing tool and so forth on the basis of client's instructions.

In addition, a plurality of candidate secretary icons are prepared every specialized domain as the secretary icon 51 (the client secretary agent 17) displayed on the screen 4, so that it is possible to select a desired candidate secretary icon in accordance with client preference on the basis of client's instructions. Furthermore, the secretary icons 51 displayed on the screen 4 have different facial expressions, different styles of dress, different regional dialects, different wording and so forth in accordance with the properties of the specialized domain and so forth.

Furthermore, The client office 52 displayed on the screen 4 includes a desk icon 53 for client, a desk icon 54 for client secretary agent, a bulletin board icon 55, a bookshelf icon 56, a telephone icon 57 and a television icon 58, and a file cabinet icon, a video icon and a stereo icon if necessary. The client can directly instruct to access the client office 52 by operating a mouse, or can instruct the secretary icon 51 (the client secretary agent 17) to access the client office 52 by language.

As an example, the verification of the contents of the language file will be described below. On the screen 4 shown in FIG. 5, the language file is contained in a file cabinet (not shown) in the client office 52. The client can directly instruct to access the language file by operating the mouse, or can instruct the secretary icon 51 (the client secretary agent 17) to access the language file by language. In addition, the client can virtually open and look the accessed language file on the desk icon 53, and can cause the secretary icon 51 (the client secretary agent 17) to read the contents of the language file and describe the summary of the contents.

Of these icons, for example, the bulletin board icon 55 and the bookshelf icon 56 are associated with the language file and language process which are managed by the client-oriented language operating system 16. In addition, the telephone icon 57 and telephone and facsimile icons (not shown) are related to physical communication apparatuses, such as a telephone and a facsimile, which are usually used by the client. Moreover, the television icon 58 and the video icon (not shown) are related to physical AV apparatuses, such as a video recorder and a stereo, which are usually used by the client. Furthermore, these physical communication apparatuses and AV apparatuses may be included in the client-oriented language computing system 10, or may be external apparatuses which are connected to the client-oriented language computing system 10.

### [2.1.3 Client Secretary]

The client secretary agent 17 has the knowledge of the client-oriented language computing system 10 and the network-oriented language computing system 20. The client secretary agent 17 exhibits a particular personality by means of the facial expression, style of dress, regional dialect and working which are presented by the secretary icon 51 on the screen 4 shown in FIG. 5, and exhibits a particular personality by means of a specialized domain.

Furthermore, the client secretary agent 17 has the following learning ability and familiarized ability using the client knowledge base 18, and functions as a personal secretary which is specialized for a specific client.
(a) It precisely understands the meaning of a client's request using a regional dialect and unique wording, and responds to the request by voice and characters according to circumstances.
(b) It has certain knowledge and flexibility, and perceives client's intention to make an appropriate proposal.
(c) It obtains other various domain knowledge through work for assisting the client.
(d) It improves its own work ability, and forms a client model.

Main jobs carried out by the client secretary agent 17 include a job to execute a language program requested by the client, a job to support execution of the language program, and a job to report the results of execution. The jobs do not only include jobs based on client's direct instructions, but they also include jobs based on the particular decisions of the client secretary agent 17.

Of these jobs, the jobs based on client's instruction include the following jobs.
(a) A job to collect required information to carry out the edition and preparation of a summary to report it to the client.
(b) A job to call the network manager agent 27 of the network-oriented language operating system 26 to request of a processing agent for each domain that it executes a job instead of the client.
(c) A job to carry out a simple travel guide and various reservations.
(d) A job to prepare and manage a language file.
(e) A job to prepare and transmit an e-mail on the basis of client's instructions.
(f) A job to support the utilization of application software, and explain the functions of computer.
   On the other hand, the jobs based on the particular decisions of the client secretary agent 17 include the following jobs.
(g) A job to manage the whole client office 52 displayed on the screen 4 shown in FIG. 5, to contain and arrange files, and to carry out alterations.
(h) A job to prepare a memo for the client.
(i) A job to prepare a memo for the client, and manage client's schedule and individual information.
(j) A job to interpret a client's language program to complement and modify the language program so that it is easily executed.
(k) A job to prepare a knowledge base for extension of domain knowledge only for the client, and for newly obtained domain knowledge.

### [2.1.4 Client Knowledge Base]

The client knowledge base 18 is designed to store knowledge to which the client secretary agent 17 refers when the client secretary agent 17 executes a language program or the like at a client's request. In the client knowledge base 18, at the client's request via the client secretary agent 17, knowledge required for the situation is retrieved and applied. Furthermore, the client knowledge base 18 is added and updated by the client secretary agent 17. In addition, knowledge stored in the client knowledge base 18 has been indexed by the client semiotic base 13 of the client language computer 12.

### [2.2 Client Language Computer]

### [2.2.1 Client Semiotic Base]

### [2.2.1.1 Outline]

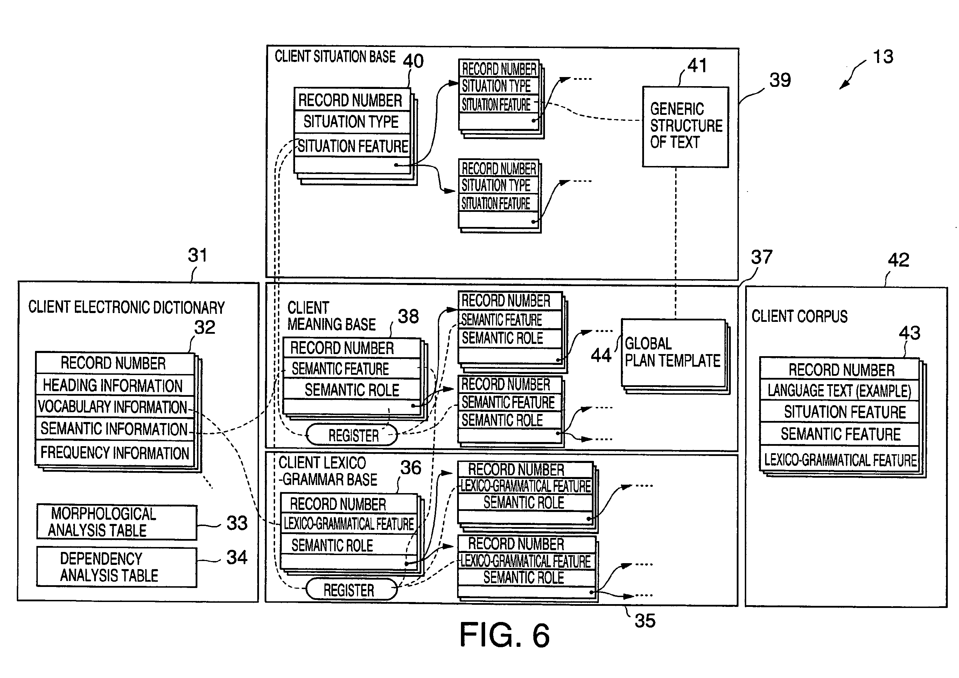

As shown in FIG. 6, the client semiotic base 13 of the client-oriented language computing system shown in FIG. 1 has a client electronic dictionary 31, a client lexico-grammar base 35, a client meaning base 37, a client situation base 39 and a client corpus 42.

### [2.2.1.2 Client Electronic Dictionary]

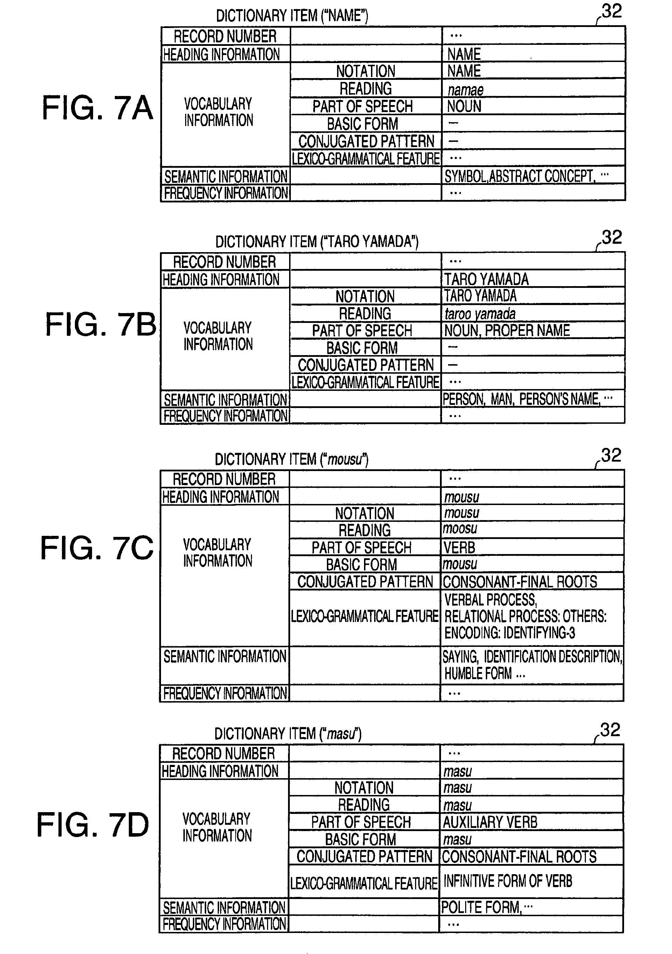

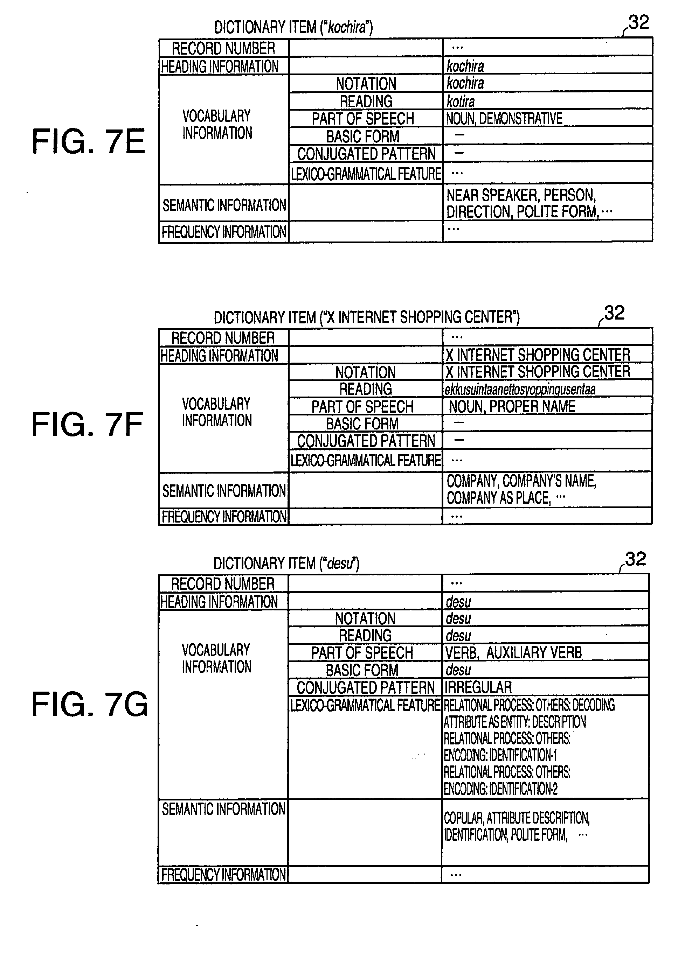

As shown in FIG. 6, the client electronic dictionary 31 holds a plurality of dictionary items 32. Each of the dictionary items 32 comprises a record number, heading information, lexicon information (notation, reading, a part of speech, a basic form, a conjugated pattern in the case of a conjugated word, and a lexico-grammatical feature), semantic information, and frequency information (see FIGS. 7A through 7G). The lexicon information of each of the dictionary items 32 is related to the lexico-grammatical feature which is held in the client lexico-grammar base 35, and the semantic information of each of the dictionary items 32 is related to a semantic feature which is held in the client meaning base 37.

In addition, in order to analyze morpheme, the client electronic dictionary 31 has statistically processed what morpheme is easy to continuously appear, and has held a morphological analysis table 33 showing probabilities which are obtained from the results of the statistical processing.

Moreover, the client electronic dictionary 31 has statistically processed what phrase is easy to have a connection, in order to analyze a conjunctive relationship, and has held a dependency analysis table 34 showing probabilities which are obtained from the results of the statistical processing.

Furthermore, in such a client electronic dictionary 31, new dictionary items can be registered by an editor or the like. Furthermore, most of items registered in the initial state are vocabularies in everyday levels. However, vocabularies particularly related to the language program may be loaded by default even in the case of professional vocabularies. In addition, dictionary items may be imported from the network electronic dictionary of the network semiotic base 23 if necessary. Moreover, the client electronic dictionary 31 may include the standard language as well as regional dialects in order to support the use of a regional dialect by the client, and may be suitably customized by an editor or the like.

### [2.2.1.3 Client Lexico-Grammar Base]

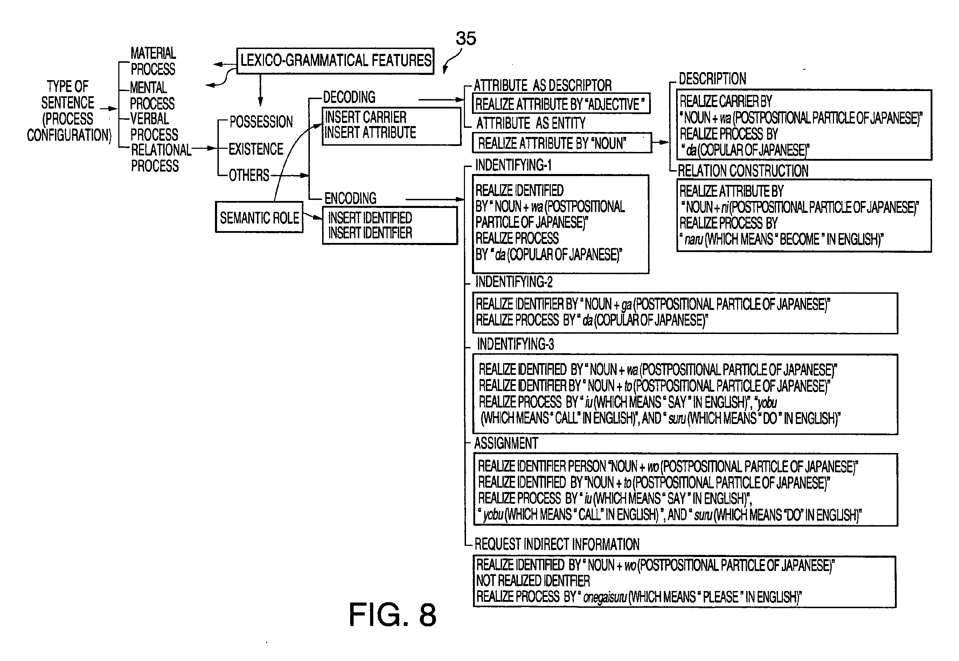

As shown in FIG. 6, the client lexico-grammar base 35 has a plurality of lexico-grammar base items 36 which are related to each other. Each of the lexico-grammar base items 36 comprises a record number, and information (lexico-grammatical feature) for describing a lexico-grammatical feature of a language. Furthermore, the lexico-grammatical feature is required to analyze a turn of phase of a language text to be connected to the semantic role of the turn of phase and the analysis of the meaning. Furthermore, all of headings registered in the client electronic dictionary 31 and possible combinations thereof have been divided into a word level, a phrase level and a section level to be systematized (see FIG. 8).

Furthermore, two kinds of information is given to the lexico-grammatical feature. One information is information on a register of words which are related to a situation type held in the client situation base 39, and indicates under what situation the lexico-grammatical feature is easily used. The other information is information (semantic role) on the way of embodying the lexico-grammatical feature, and indicates what semantic role is embodied by the lexico-grammatical feature (see FIG. 8).

Furthermore, the relationship between lexico-grammatical features and semantic roles is as follows. For example, if the lexico-grammatical feature of a wording "Taro (name of Japanese)" is "noun + a postpositional of case of Japanese (*ga*)" and if "noun + a postpositional particle of case of Japanese (*ga*)" can express a semantic role which is <subject of action>, "Taro *ga*" of "Taro *ga aruku*" (which means "Taro walks" in English) expresses a person who carries out an action of walking, i.e., a semantic role which is <subject of action>, with respect to <action> which is walking.

### [2.2.1.4 Client Meaning Base]

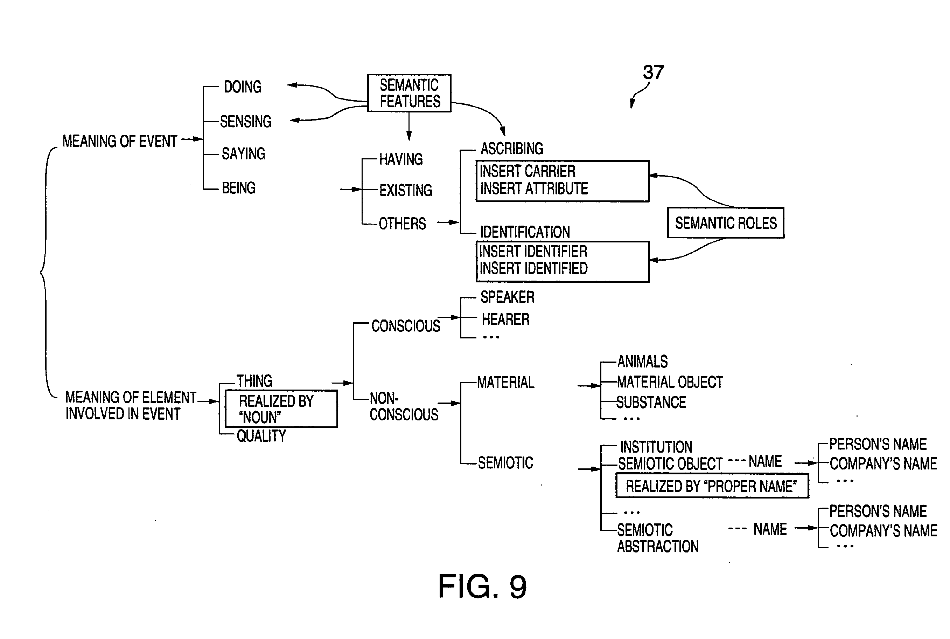

As shown in FIG. 6, the client meaning base 37 has a plurality of meaning base items 38 which are related to each other. Each of the meaning base items 38 comprises a record number, and information (semantic feature) for describing the semantic feature of a language. Furthermore, the semantic feature is required to analyze the meaning of a language text to be connected to the semantic role of the meaning and the analysis of lexico-grammatical features. Furthermore, in the client meaning base 37, information introduced into the client electronic dictionary 31 as semantic information is systematized mainly on the basis of the relationship between upper and lower (see FIG. 9). Furthermore, the client meaning base 37 preferably includes the meanings of words described in a usual Japanese-language dictionary or the like, concepts described in a quasi-synonym dictionary (thesaurus), and the meanings of "instructions" and "questions" expressed by the whole sentence.

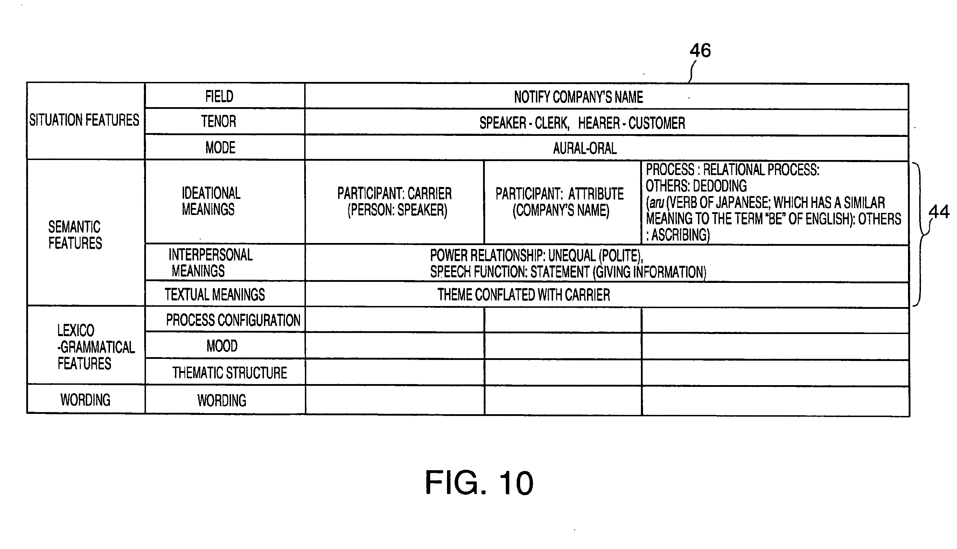

Furthermore, two kinds of information is given to the semantic feature. One information is information on a register of words, which is related to a situation type held in the client situation base 39, and indicates under what situation the semantic feature is easy to appear. The other information is information (semantic role) on the way of embodying the semantic feature, and indicates what semantic role is embodied by the semantic feature (see FIG. 9). In other words, the register of words given to the semantic feature of each of the meaning base items 38 indicates under what scene of a situation structure (which will be described later) of a text corresponding to a situation type held in the client situation base 39 it is easy to appear. The semantic feature expressing a meaning typically exchanged on this scene is held as a global plan template 44 (see FIG. 10).

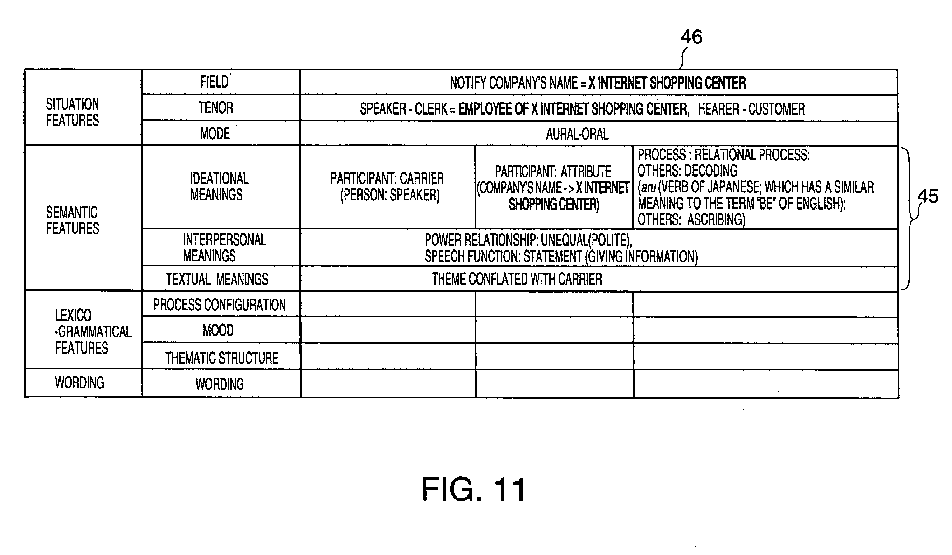

As shown in FIG. 10, the global plan template 44 is a template for semantic features constituting a part of a language text information 46. The global plan template 44 includes slots for assigning what items of semantic features should enter. By filling the slots with items satisfying the semantic feature on the basis of the client meaning base 37, it is determined what semantic feature is included in each sentence. Furthermore, one indicating what semantic feature is included in each sentence is called a local plan (see reference number 45 in FIG. 11).

Furthermore, in the global plan template 44 and the local plan 45, the semantic features are divided into three kinds to be described. The semantic features of a first kind are "ideational meanings", and are mainly features for characterizing the meanings of noun and verb phases constituting a sentence (e.g., expressions of person, place, action, state and so forth) The semantic features of a second kind are "interpersonal meanings", and are features for describing a speaker's attitude toward a hearer via a sentence (e.g., the other party is a speaker's senior, or the speaker respectfully attends to the hearer due to the first time the speaker meets the hearer), and a speaker's attitude to the contents of the sentence (e.g., the sentence includes contents which cannot be understood by the speaker, so that the speaker asks a question). The semantic features of a third kind are "textual meanings", and are features for characterizing what sentence presents sentence's topics. Furthermore, topics are sometimes presented in the sentence, or no topics cannot be presented if the topics are naturally sufficiently understood. Therefore, selections relating to the topics are herein set. These selections are embodied by lexico-grammatical features held in the client lexico-grammar base 35 (features described as "process configuration", "the mood" and "theme structure" in FIGS. 10 and 11), respectively.

Such semantic features and lexico-grammatical features have been previously related to each other. That is, by the above described information on the way of embodying semantic features (semantic role), it is assigned what lexico-grammatical feature embodies a semantic feature in a sentence (e.g., a semantic feature "*kanshasuru*" (which means "acknowledge" in English) is embodied by a lexico-grammatical feature "*arigato*" (which means "thank you" in English) or "*sumimasen*" (which means "I am sorry" in English) held in the client lexico-grammar base 35), and what semantic role is embodied by a semantic feature (if "Taro" has a semantic feature "human's name" and if "human" has a semantic role <subject of action>, "Taro" of "Taro *ga hashiru"* (which means "Taro runs" in English) has a semantic role <subject of action> with respect to <action> *"hashiru"* (which means "run" in English)).

### [2.2.1.5 Client Situation Base]

As shown in FIG. 6, the client situation base 39 has a plurality of situation base items 40 which are related to each other. Each of the situation base items 40 comprises a record number, and information (situation type) obtained by classifying and grouping situations, in which a language is used, on the basis of analogous relationship.

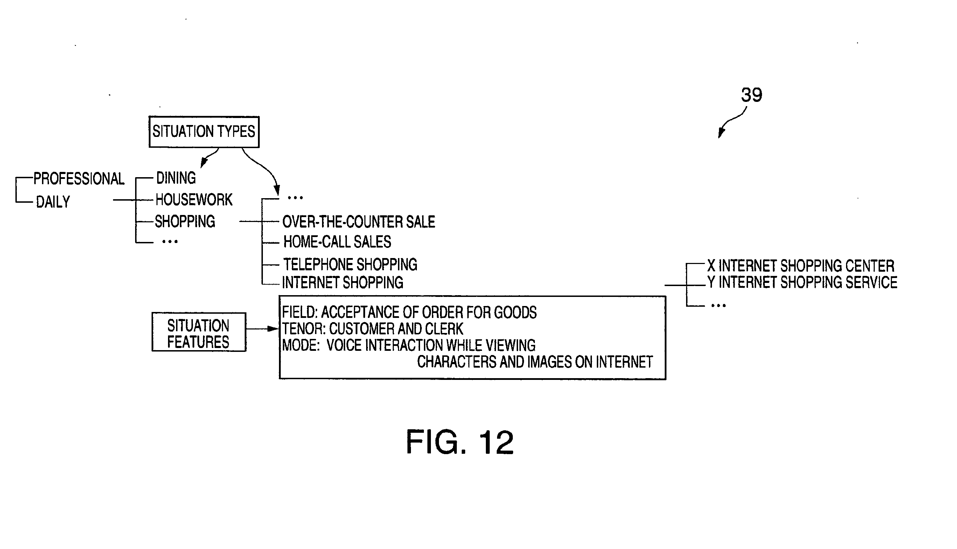

Furthermore, to the situation type, situation features corresponding thereto is given. The situation features comprise three features of field, tenor and mode (see FIG. 12). The field is relevant to what is carried out with language (e.g., a job is explained). The tenor is relevant to who concerns (e.g., the client is an originator, and the client secretary agent is an addressee). The mode is relevant to how the language is transmitted (e.g., a voice output is supposed to be written). If these three kinds of features vary, the way of using the language varies.

In a certain situation type in daily life, humans intuitively make various estimates with respect to how speech is developed, what meaning is exchanged, what wording is made, and so forth, and use an appropriate language. In order to reproduce the same on the computer, it is required to previously connect situation types to features (lexico-grammatical features and semantic features) of a language which is typically used therein. Therefore, information on situation type is given to each of the situation base items 40 of the client situation base 39, and information on the register of languages is given to each of the lexico-grammar base items 36 of the client lexico-grammar base 35 and each of the meaning base items-38 of the client meaning base 37, so that the register of languages can be derived from the situation type and so that the situation type can be derived from the register of languages.

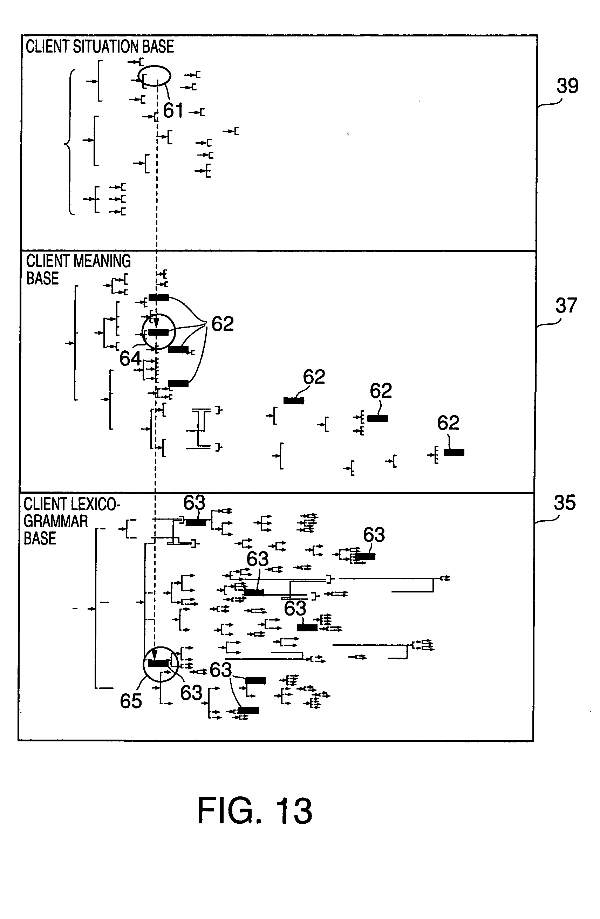

FIG. 13 is a diagram for explaining an association between the client situation base 39, the client meaning base 37 and the client lexico-grammar base 35 in the client semiotic base 13 shown in FIG. 6.

In FIG. 13, a portion shown by an ellipse in the client situation base 39 shows a situation type. In association therewith, the register of the client meaning base 37 (see reference number 62), and the register of the client lexico-grammar base 35 (see reference number 63) are extracted. By such association of situation types with registers, an appropriate wording is derived if the situation of the use of a language and a meaning to be transmitted therein are given, and an appropriate meaning is derived if the situation of the use of the language and a wording to be transmitted therein are given. Moreover, if one (see reference number 64) is selected from semantic features (see reference number 62) corresponding to the register of the client meaning base 37 which is restricted by a specific situation type, a lexico-grammatical feature (see reference number 65) embodying the selected semantic feature is selected from lexico-grammatical features (see reference number 63) corresponding to the register of the client lexico-grammar base 35. If the situation type varies, association of semantic features with lexico-grammatical features varies.

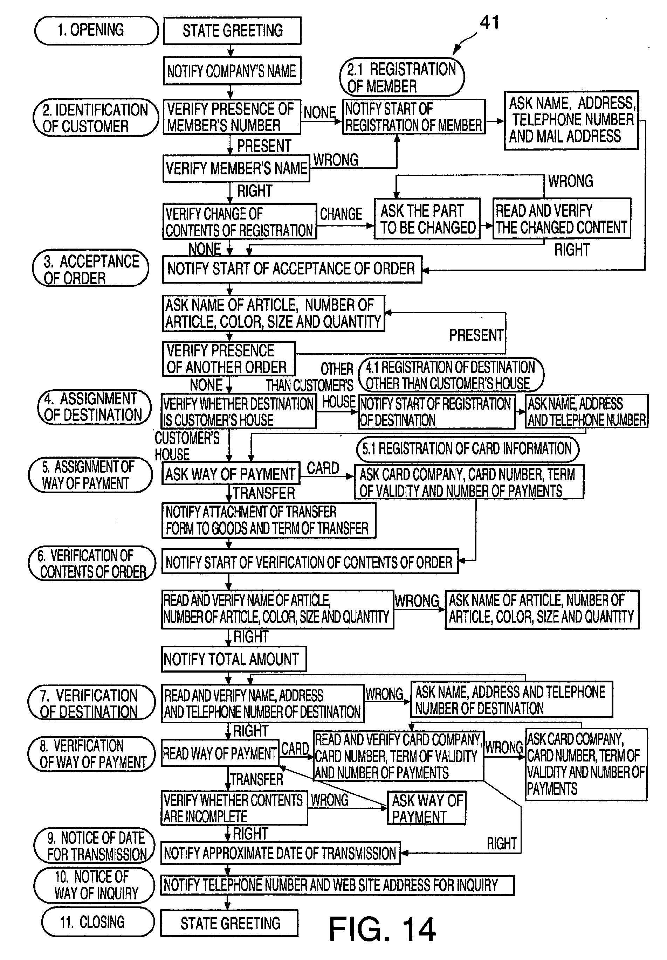

Moreover, the client situation base 39 has held a generic structure 41 of a text corresponding to the situation type (see FIG. 14). As shown in FIG. 14, the generic structure 41 shows a rough development of a language text, and includes information as to what situation exists in a certain situation, what number the situation appears, and whether the situation is essential. Each of situations of the generic structure 41 of the text is associated with the global plan template 44 held in the client meaning base 37.

Furthermore, in such a client situation base 39, a new situation type and a new generic structure of text can be prepared by an editor or the like. In addition, the number of characters in a sentence of summary can be restricted at a client's request, and the sentence of summary including only specific information required for the client can be prepared. Moreover, if necessary, situation types and generic structures of the text may be imported from the network situation base of the network semiotic base 23.

### [2.2.1.6 Client Corpus]

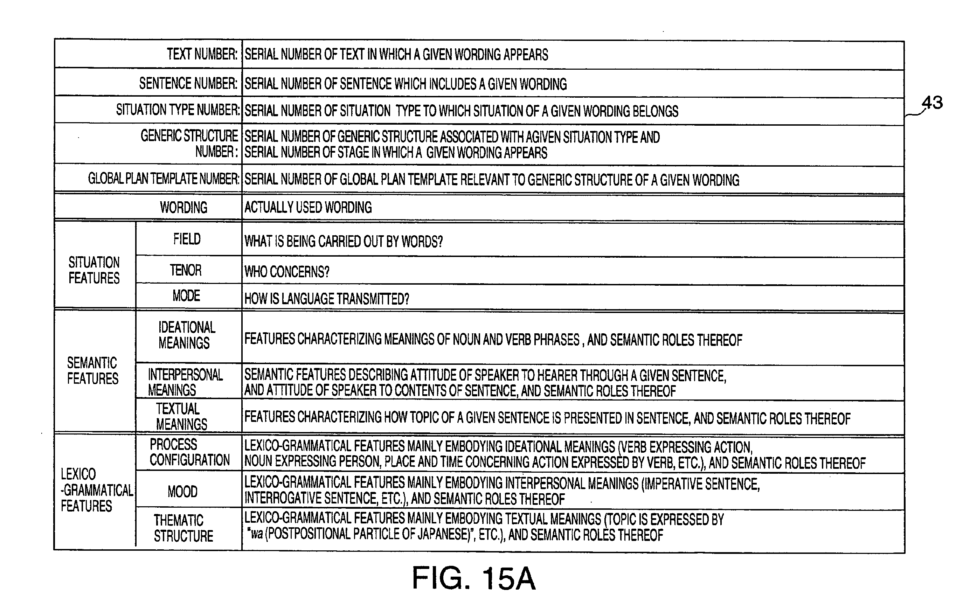

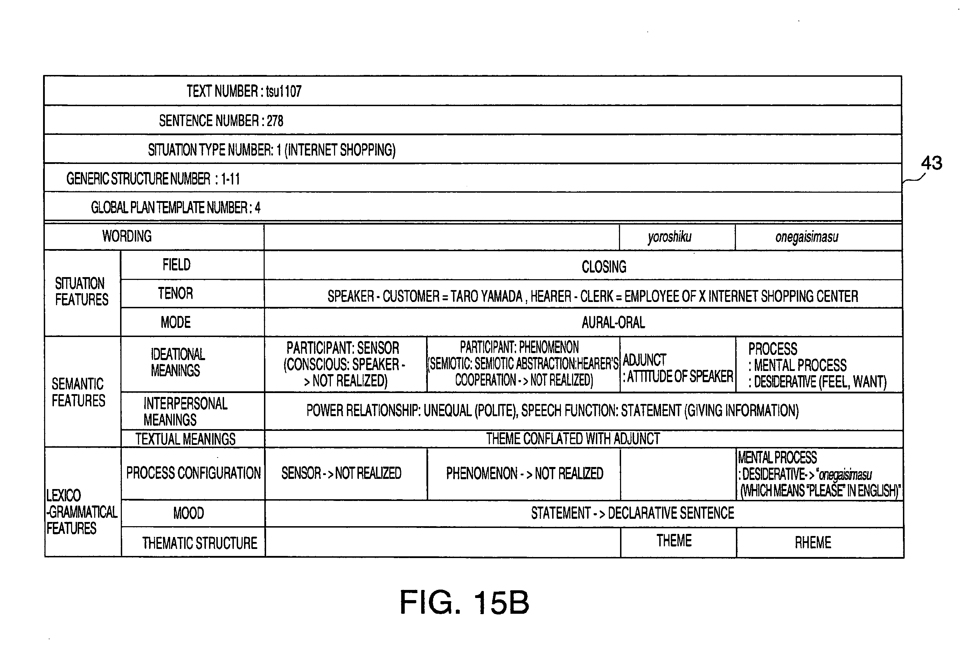

As shown in FIG. 6, the client corpus 42 has a plurality of corpus items 43. Each of the corpus items 43 comprises a record number, and a language text serving as an example of exchange of a language. Furthermore, each language text is analyzed in accordance with language systems in the client electronic dictionary 31, client lexico-grammar base 35, client meaning base 37 and client situation base 39, and respective features (lexico-grammatical features, semantic features and situation features) are described therein (see FIGS. 15A and 15B). Furthermore, in the initial state, language texts belonging to various situation types, such as newspapers and everyday conversations, are stored. Comparing the language systems in the client electronic dictionary 31, client lexico-grammar base 35, client meaning base 37 and client situation base 39 with the features (lexico-grammatical features, semantic features and situation features) of the language texts in the client corpus 42, it can be seen what other features adapted to be embodied exist in the language systems with respect to the features actually embodied in the language texts.

Furthermore, in such a client corpus 42, all of exchanges of language texts between the client and the client secretary agent 17, together with their lexico-grammatical features, semantic features and situation features, are recorded. Then, during understanding of the meaning of a language text and generation of a language text, it is possible to rapidly carry out a processing by preferentially utilizing a language text which was frequently used by the client.

### [2.2.2 Client Meaning Processing Mechanism]

### [2.2.2.1 Outline]

In the client language computer 12 shown in FIG. 1, all processing for language texts carried out by the client meaning processing mechanism 14 is carried out by means of language system resources in the client semiotic base 13. The basic processing for language text is generally divided into a processing for understanding the meaning of a given language text, and a processing for generating a language text corresponding to the situation. As a case particularly taking account of interpersonal relations in generation of a language text although it is basically included in a category of generation of a language text, there is a translation of a language text.

Timings in understanding the meaning of a language text, generating the language text and translating the language text using the client semiotic base 13 by means of the client meaning processing mechanism 14 will be enumerated below.
(1) Understanding of Meaning of Language Text
   (a) When the client secretary agent 17 receives a language program described or dictated by the client.
   (b) When the client secretary agent 17 receives the results of execution of a language program.
   (c) When the client secretary agent 17 receives a summary of the results of execution of a language program left to the network manager agent 217.
(2) Generation of Language Text
   (a) When the client secretary agent 17 greets the client after the client-oriented language computing system 10 starts.
   (b) When a question described or dictated by the client is answered after understanding the question.
   (c) When a language program described or dictated by the client is modified in order to request of the network manager agent 27 that it executes the language program, after understanding the language program.
   (d) When the client secretary agent 17 intends to derive necessary information from the client since the client secretary agent 17 founds that necessary information falls short in order to execute a language program described or dictated by the client although the client secretary agent 17 understood the language program.
   (e) When the contents of the results of execution of a language program are summarized after understanding the result of execution of the language program.
   (f) When the results of execution of a language program and the summary thereof are edited so as to suit to client's preference after understanding the summary of the results of execution of the language program left to the network manager agent 27.
(3) Translation of Language Text
   (a) When Clients communicate with each other by means of different kinds of languages.
   (b) When the client requests of the client secretary agent 17 that it translates a language text.
   (c) When a professional's difficult speech is translated into a speech of a level which can be understood by the client.
   (d) When a certain regional dialect is translated into another regional dialect, or a language serving as the standard language.

Furthermore, the basis of the processing for a language text includes understanding of the meaning of a language text, and generation of a language text. The translation of the language text can be considered as understanding of the original text and generation of a translated text. Therefore, the contents of understanding of the meaning of a language text and generation of a language text will be concretely described below.

### [2.2.2.2 Understanding of Meaning of Language Text]

As an example of a processing for understanding the meaning of a language test, understanding of the meaning of a language program described by the client will be-described below.

### <Processing Example 1>

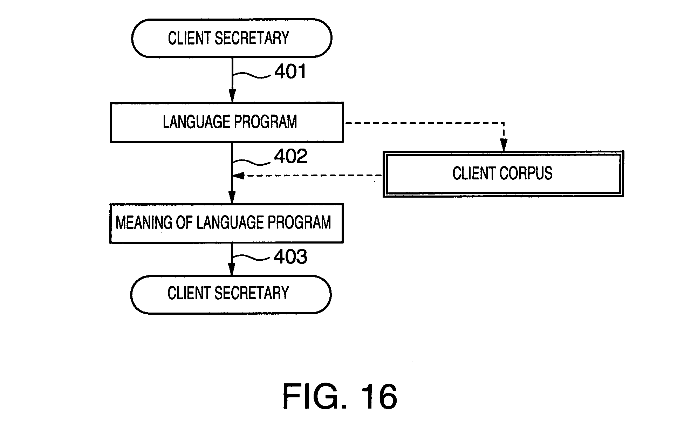

FIG. 16 is a flow chart for explaining an example of understanding of the meaning of a language text. Furthermore, the flow chart of FIG. 16 shows the relationship between information (rectangular box line) serving as an object to be processed and the respective parts (rectangular double box line) of a client semiotic base used for processing, together with the flow (arrow) of control.

In FIG. 16, first, the client language computer 12 receives a language program, which is inputted by the client, from the client secretary agent 17 (step 401).

The client meaning processing mechanism 14 of the client language computer 12 refers to the client corpus 42 to verify whether the client corpus 42 has a language text which is analogous to a language text included in the language program (step 402).

If an analogous language text is found in the client corpus 42, the semantic feature of the language text is delivered to the client secretary agent 17 as the meaning of the language program (step 403).

Thus, understanding of the meaning of the language program is completed.

Furthermore, in the example of processing shown in FIG. 16, the meaning of the language program is understood by using only the client corpus 42 which is a part of the client semiotic base 13.

### <Processing Example 2>

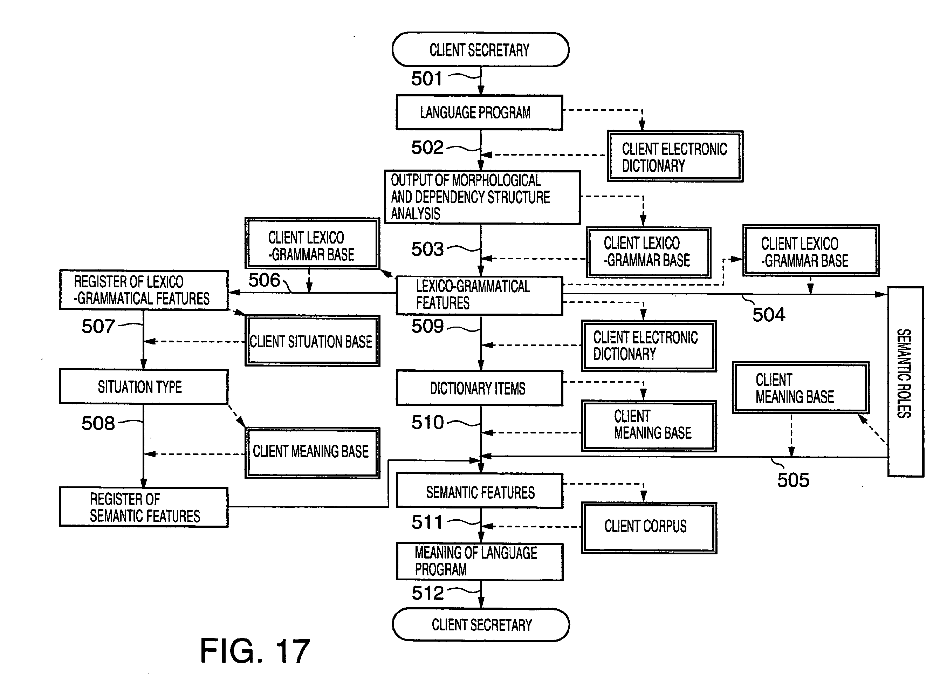

On the other hand, if no analogous language text is found in the client corpus 42 at step 402, a processing shown in FIG. 17 is carried out.

FIG. 17 is a flow chart for explaining understanding of the meaning of a language program by using the whole client semiotic base 13. Furthermore, a way for expressing the flow chart shown in FIG. 17 is the same as that in FIG. 16.

In FIG. 17, first, the client language computer 12 receives a language program, which is inputted by the client, from the client secretary agent 17 (step 501).

The client meaning processing mechanism 14 of the client language computer 12 refers to the morphological analysis table 33 and dependency analysis table 34 of the client electronic dictionary 31, to carry out a morphological analysis and a parsing with respect to a language text included in the language program (step 502). Then, the client meaning processing mechanism 14 refers to the client lexico-grammar base 35 to identify lexico-grammatical features from a string character having information on the results of the morphological analysis and parsing (step 503).

Thereafter, referring to the client lexico-grammar base 35 to identify a semantic role adapted to express each of lexico-grammatical features obtained at step 503 (step 504).

In addition, referring to the client meaning base 37 to identify semantic features adapted to have semantic roles obtained at step 504 (step 505).

On the other hand, referring to the client lexico-grammar base 35 to identify its register, from lexico-grammatical features obtained at step 503 (step 506).

In addition, referring to the client situation base 39 to identify a situation type corresponding to its register, from the register of the lexico-grammatical features, which is obtained at step 506 (step 507).

Then, referring to the client electronic dictionary 31 to output dictionary items including the lexico-grammatical features obtained at step 503 (step 509).

In addition, referring to the client meaning base 37 to extract semantic information included in the dictionary items obtained at step 509, to identify a semantic feature, which is adapted to actually have the semantic role obtained at step 504, in the register of the semantic feature which is obtained at steps 506 through 508 (step 510).

Thereafter, referring to the client corpus 42 to verify whether the client corpus 42 has an example of a language text having the same semantic feature. If it has the example, language text information is registered in the corpus item of the semantic feature, and if it does not have the example, a new corpus item is prepared to register language text information therein (step 511).

Finally, the semantic feature obtained in the above described processing is delivered to the client secretary agent 17 as the meaning of the language program (step 512).

Furthermore, at the above described steps 501 through 512, the processes at steps 506 through 508 are carried out if any situation types have not been assigned, and are omitted if a concrete situation type has been set.

### <Concrete Example>

As an example of the above described understanding of the meaning of the language program, a language text exchanged under the setting of a situation of Internet shopping will be concretely described below.

Furthermore, as a premise, the situation type "Internet shopping" has been defined in the client situation base 39 as shown in FIG. 12. In addition, in this situation type, the generic structure 41 of a text shown in FIG. 14 has been set. Furthermore, the outline of the generic structure 41 of the text shown in FIG. 14 is as follows.
1. First Greeting
2. Identification of Customer
   (2.1 Registration of Member)
3. Acceptance of Order
4. Assignment of Destination
   (4.1 Registration of Destination other than Customer's House)
   ((4.2 Assignment of Gift))
5. Assignment of Way of Payment
   (5.1 Registration of Card Information)
6. Verification of Contents of Order
7. Verification of Destination
8. Verification of Way of Payment
9. Notice of Date for Transmission
   (9.1 Assignment of Date for Transmission)
10. Notice of Way of Inquiry
11. Closing

Furthermore, contents in single parenthesis show situations which are not always observed in the situation of Internet shopping and which are relatively frequently observed. Contents in double parenthesis show situations which are hardly observed and which occasionally appear. Contents having no parenthesis show essential situations. Furthermore, in FIG. 14, situations in double parenthesis of the above described situations are omitted.

First, understanding of the meaning of a language program according to the example of processing shown in FIG. 16 will be described below. Of the above described generic structure of text, a customer's conversation "(*Hai, yoroshiku*) *onegaisimasu"* (which means "please remember me to *substantive"* in English) in the last situation "11. Closing" in the above described generic structure of text, or the like is a wording peculiar to that situation. Thus, the wording peculiar to the situation is held in the client corpus 42 in a state that its meaning has been previously understood (see FIG. 15B). Therefore, if a language text held in the client corpus 42 is utilized in accordance with the example of processing shown in FIG. 16, the meaning of the language text can be easily assigned.

Then, understanding of the meaning of a language according to an example of processing shown in FIG. 17 will be described below. It is herein assumed that, of the above described generic structure of text, the situation "to ask questions about name, address, telephone number and mail address" in the identification of a customer is an object. The following language text is an extract from an example of an actual conversation. However, the personal name has been replaced.
Clerk (Agent): Then, please tell me your name, address, telephone number and e-mail address in order to register you as a member. (A)
Customer (Client): My name is Taro Yamada. ("*Hai, namae wa Yamada Taro to mousimasu"* in Japanese) (B)
Clerk (Agent): Please tell me your name in *kanji.*

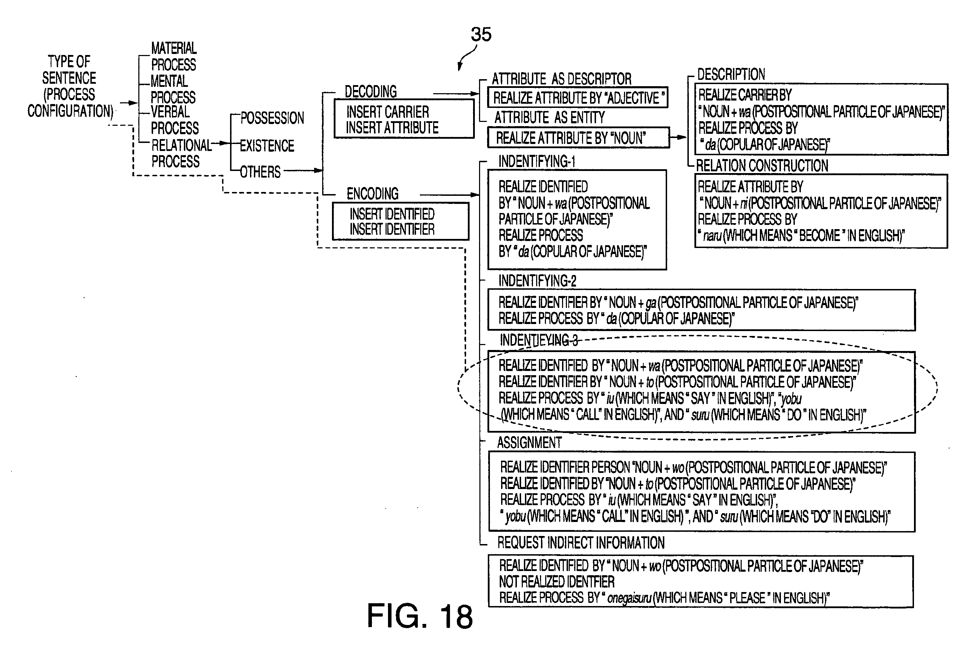

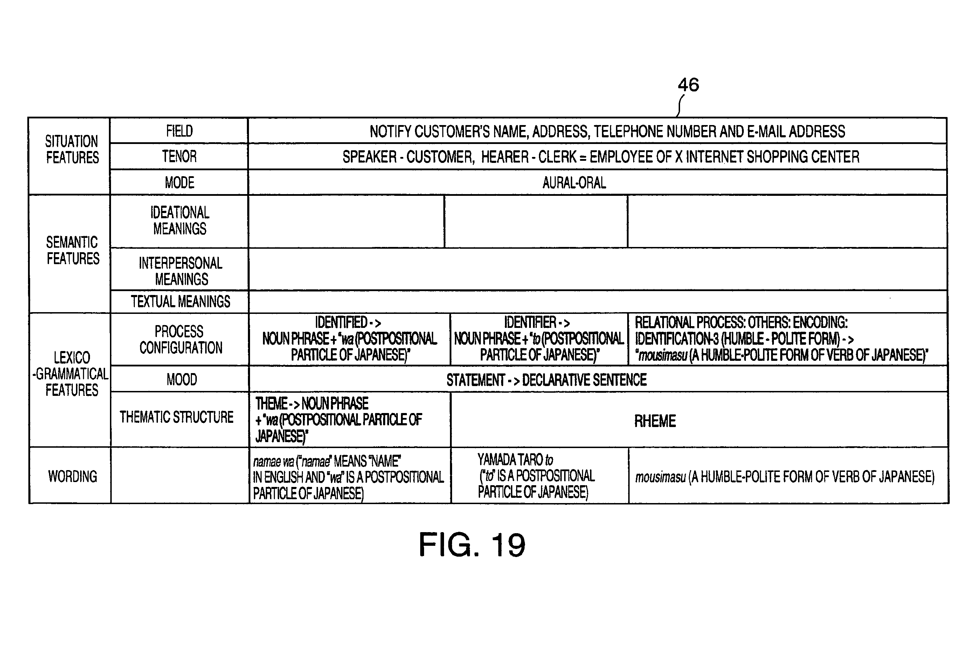

In response to the customer's conversation (A), the meaning of the customer's wording (B) is understood through the following processing. First, referring to the client electronic dictionary 31, the morphological analysis and parsing are carried out with respect to the wording (B) (the above described step 502). Then, referring to the client lexico-grammar base 35, the lexico-grammatical feature of the wording (B) is identified (the above described step 503). Moreover, the semantic role of the lexico-grammatical feature is identified (the above described step 504). Furthermore, at this time, the lexico-grammatical feature and semantic role of a portion shown by a dotted line in FIG. 18 are selected. Thus, language text information obtained until this time is shown in FIG. 19.

Then, referring to the client meaning base 37, the semantic features of *"namae* (which means name in English), Taro Yamada, and *mousimasu* (a humble-polite form of verb of Japanese)" are identified. In this case, the semantic role identified from the lexico-grammatical feature is used for identifying a semantic feature corresponding to the semantic role (the above described step 505).

In addition, referring to the client electronic dictionary 31, dictionary items including the lexico-grammatical features as lexico-grammatical information are outputted (the above described step 509). Thus, dictionary items shown in FIGS. 7A through 7D are outputted.

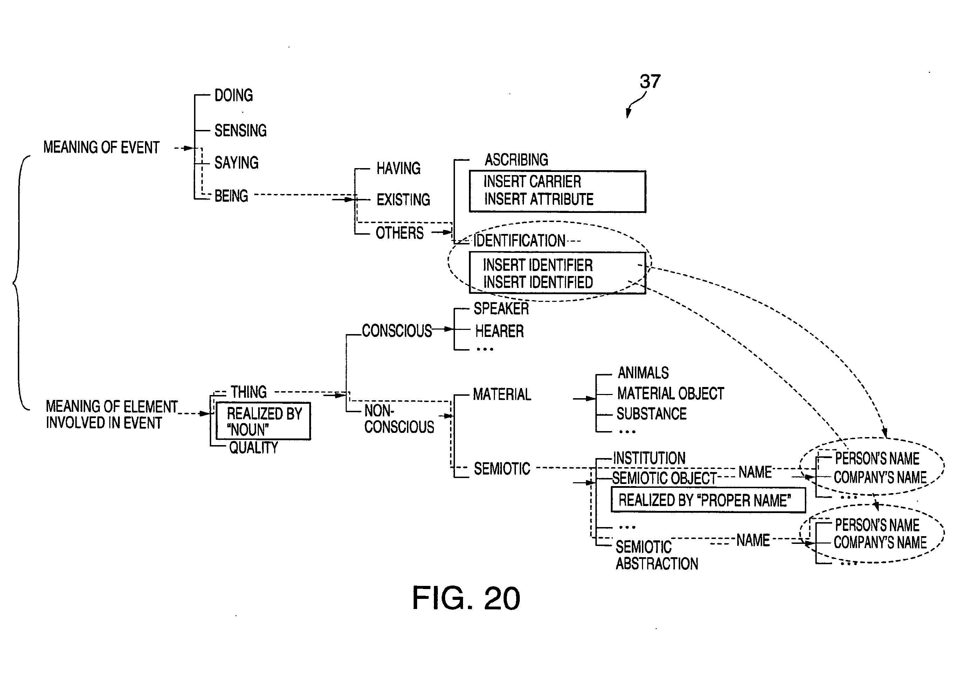

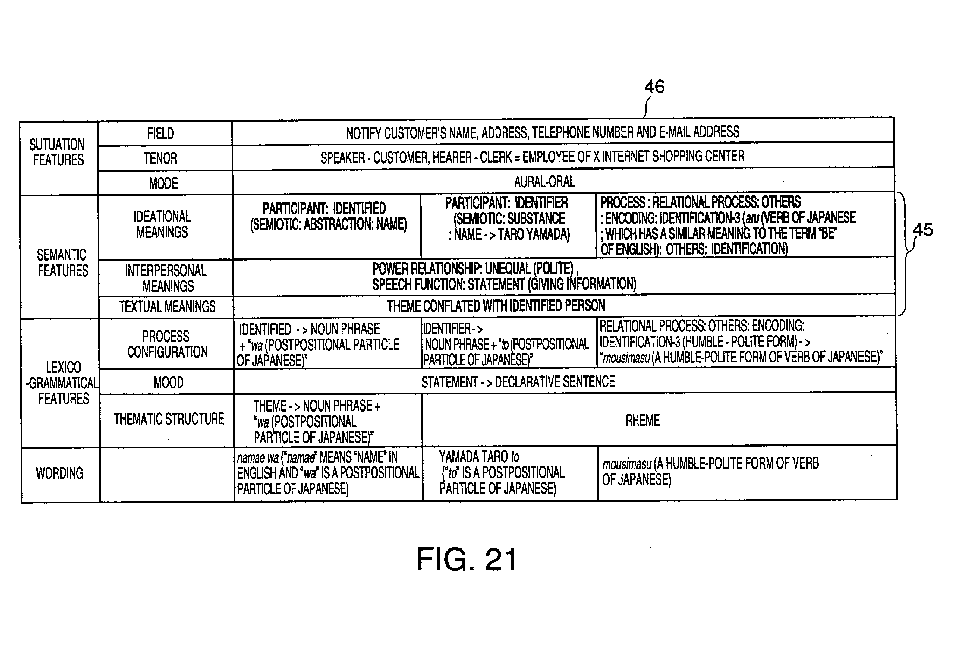

Thereafter, referring to the client meaning base 37, a semantic feature of a wording (B) is identified on the basis of semantic information included in these dictionary items and of the semantic role obtained by the client lexico-grammar base 35 (step 510). Furthermore, at this time, in the client meaning base 37, a semantic role and semantic feature of a portion shown by a dotted line in FIG. 20 are selected. Thus, a local plan 45 shown in FIG. 21 is prepared. When such a local plan 45 is obtained, understanding of the meaning of the language text is completed.

Furthermore, referring to the client corpus 42, it is verified whether an example of a language text having the same semantic feature exists. If it exists, language text information on a wording (B) is registered in corpus items having the semantic feature. If it does not exists, a new corpus item having the semantic feature is prepared, and language text information on the wording (B) is registered therein (the above described step 511).

Finally, the semantic feature obtained in the above described processing is delivered to the client secretary agent 17 as the meaning of the wording (B) (the above described step 512).

### [2.2.2.3 Generation of Language Text]

As an example of generation of a language text, a process for making a report of the results of execution of a language program will be described below.

### <Processing Example 1>

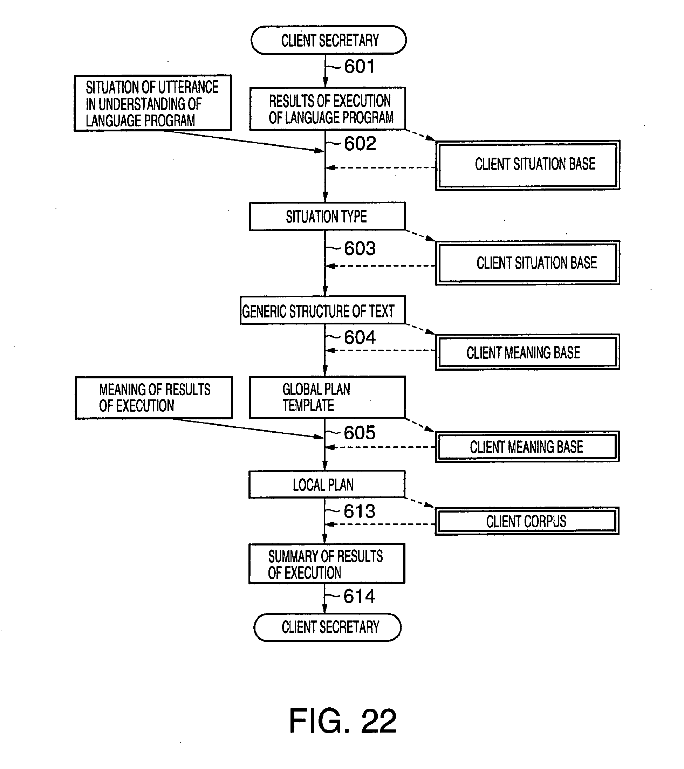

FIG. 22 is a flow chart for explaining an example of generation of a language text. Furthermore, the flow chart of FIG. 22 shows the relationship between information (rectangular box line) serving as an object to be processed and the respective parts (rectangular double box line) of a client semiotic base used for processing, together with the flow (arrow) of control.

In FIG. 22, first, the client language computer 12 receives the results of execution of a language program, from the client secretary agent 17 (step 601).

The client meaning processing mechanism 14 of the client language computer 12 refers to the client situation base 39 to identify a situation type during generation of a language text while referring to a situation type obtained during understanding of the language program (step 602).

In addition, referring to the client situation base 39, a generic structure of text corresponding to the situation type during generation of the language text is identified (step 603).

Moreover, referring to the client meaning base 37, a global plan template, which is relevant to each situation of the generic structure of text, is identified (step 604).

Thereafter, referring to the client meaning base 37, the semantic feature obtained as the results of execution of the language program is added to be filled in a slot of the global plan template, which is obtained at step 604, to prepare a local plan (step 605). Furthermore, if necessary, the meaning of the results of execution of the language program is understood by the processing shown in FIGS. 16 and 17, and a semantic feature obtained as a result is used.

Thus, the situation type and the local plan during generation of the language text are obtained.

At this time, referring to the client corpus 42, it is verified whether a language text having analogous situation feature and semantic feature exists. If an example of an analogous language text in the client corpus 42 is found, the wording of the language text is taken out as a summary of the results of execution of the language program (step 613) to be delivered to the client secretary agent 17.

Thus, the process for making the report of the results of execution of the language program is completed.

### <Processing Example 2>

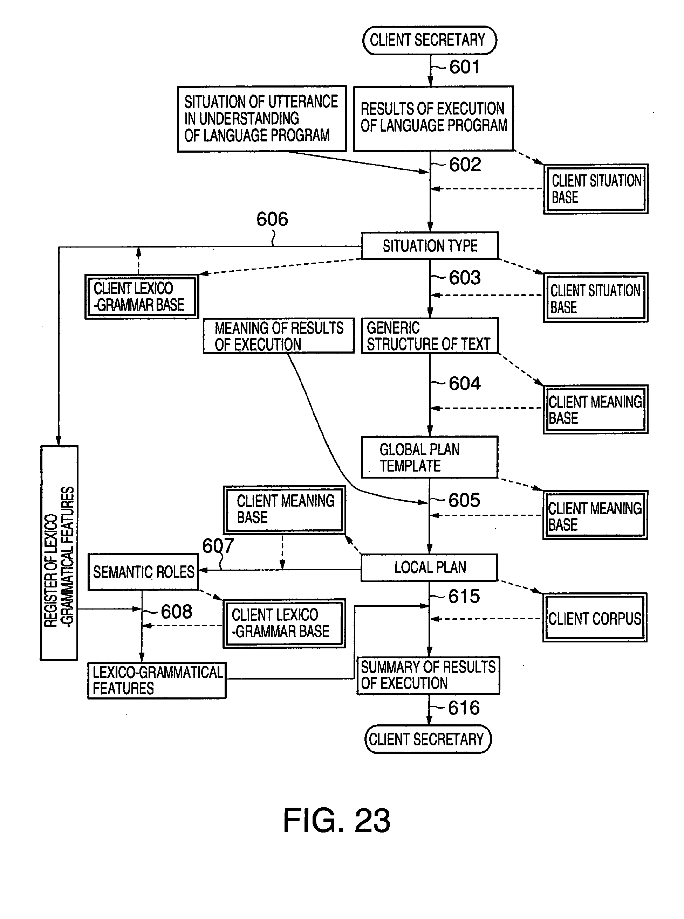

Furthermore, at the above described step 613 in the example of processing, if any language texts having analogous situation feature and semantic feature have not been found in the client corpus 42, a processing shown in FIG. 23 is carried out.

FIG. 23 is a flow chart for explaining a process for a report of the results of execution of a language program using the client lexico-grammar base 35 of the client semiotic base 13, the client meaning base 37, the client situation base 39 and the client corpus 42. Furthermore, a way for expressing the flow chart shown in FIG. 23 is the same as that in FIG. 22. In addition, steps 601 and 605 are the same as those in FIG. 22, so that the descriptions thereof are omitted.

In FIG. 23, first, referring to the client lexico-grammar base 35, the register of a lexico-grammatical feature which corresponds to the situation type during generation of the language text obtained at step 602, is identified (step 606).

In addition, referring to the client meaning base 37, a semantic role adapted to be possessed by the semantic features in the local plan obtained at step 605 is identified (step 607).

Moreover, referring to the client lexico-grammar base 35, a lexico-grammatical feature adapted to actually have the semantic role identified at step 607 is identified in the range of the register of the lexico-grammatical feature which is obtained at step 606 (step 608).

Thus, the situation type, local plan and lexico-grammatical feature during generation of the language text are obtained.

At this time, referring to the client corpus 42, it is verified whether a language text having analogous situation feature, semantic feature and lexico-grammatical feature exists. If an example of an analogous language text is found in the client corpus 42, the wording of the language text is taken out as a summary of the results of execution of the language program (step 615) to be delivered to the client secretary agent 17 (step 616).

Thus, the process for making the report of the results of execution of the language program is completed.

### <Processing Example 3>

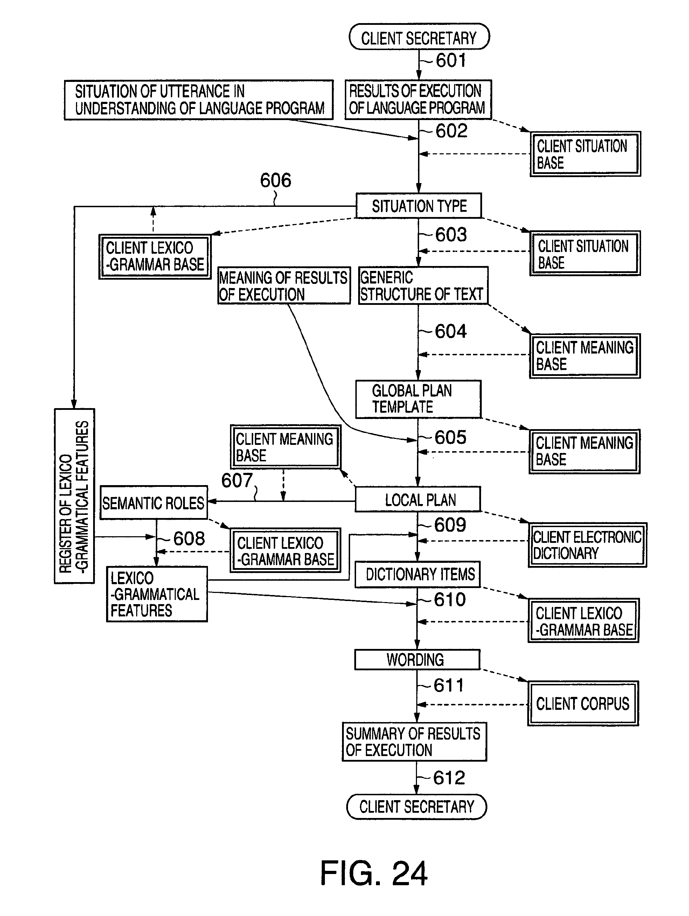

Furthermore, at the above described step 615 in the Processing Example 2, if any language texts having analogous situation features, semantic features and lexico-grammatical features have not been found in the client corpus 42, a processing shown in FIG. 24 is carried out.

FIG. 24 is a flow chart for explaining a process for making a report of the results of execution of a language program using the client electronic dictionary 31, client lexico-grammar base 35, client meaning base 37, client situation base 39 and client corpus 42 of the client semiotic base 13. Furthermore, a way for expressing the flow chart shown in FIG. 24 is the same as those in FIGS. 22 and 23. In addition, steps 601 and 608 are the same as those in FIGS. 22 and 23, so that the descriptions thereof are omitted.

In FIG. 24, referring to the client electronic dictionary 31, a dictionary item including a semantic feature in a local plan obtained at step 605 and a lexico-grammatical feature obtained at step 608 is outputted (step 609).

In addition, referring to the client lexico-grammar base 35, the lexico-grammatical feature obtained step 608 is combined with the dictionary item obtained at step 609 to prepare a wording (step 610).

Thereafter, referring to the client corpus 42, it is verified whether an example of a language text having the same wording exists. If it exists, information on the language text having the wording is registered in a corpus item having the wording. If it does not exist, a new corpus item is prepared, and a language text information having the wording is registered therein (step 611).

Finally, the wording obtained in the above described processing is delivered to the client secretary agent 17 as a summary of the results of execution of the language program (step 612).

Furthermore, the processing at steps 601 through 605 of the above described steps 601 through 616 is carried out if the situation type has not been assigned. If a concrete situation type has been set, this processing is omitted by utilizing the generic structure of text and the global plan template.

### <Concrete Example>

As an example of the above described report of the results of execution of the language program, a language text exchanged under the setting of a situation of Internet shopping will be subsequently described below.

First, as a premise, the situation type "Internet shopping" has been defined in the client situation base 39 as shown in FIG. 12. In addition, in this situation type, the generic structure 41 of a text shown in FIG. 14 has been set.

In the generic structure 41 of the text shown in FIG. 14, the current object is a situation "Notice of Company's Name" of "1. Opening".

Furthermore, each situation of the generic structure of text is relevant to the global plan template 44 wherein it has been set what meaning is exchanged in each situation of the generic structure of text.

FIG. 10 shows a global plan template 44 wherein it has been set what meaning is exchanged in the situation "Notice of Company's Name" of "1. Opening". Furthermore, the global plan template is common to language texts belonging to the situation type "Internet shopping". In order to assign a wording of an actual language text, a local plan must be prepared on the basis of the global plan template. The local plan is prepared by inserting concrete items about semantic features into slots of the global plan template. For example, if a currently prepared language text is a language text of a company "X Internet Shopping Center", an individual name "X Internet Shopping Center" is inserted into "Company's Name" of the global plan template 44 shown in FIG. 10, and the local plan 44 shown in FIG. 11 is prepared (the above described step 605). By such a local plan 45, a concrete meaning a sentence is described. Furthermore, the local plan is prepared every time in order to produce a language text. On the other hand, the global plan template has been previously held in the client meaning base 37 in the client semiotic base 13.

If the local plan is prepared, it is required to assign a lexico-grammatical feature on the basis of the local plan. However, if an example of a language text having analogous situation feature and semantic feature (local plan) has been found referring to the client corpus 42, subsequent processes can be omitted by utilizing the wording in the example (corresponding to an example of processing in FIG. 22).

On the other hand, if any examples of a language text having analogous situation feature and semantic feature (local plan) have not been found, the following processing is carried out.

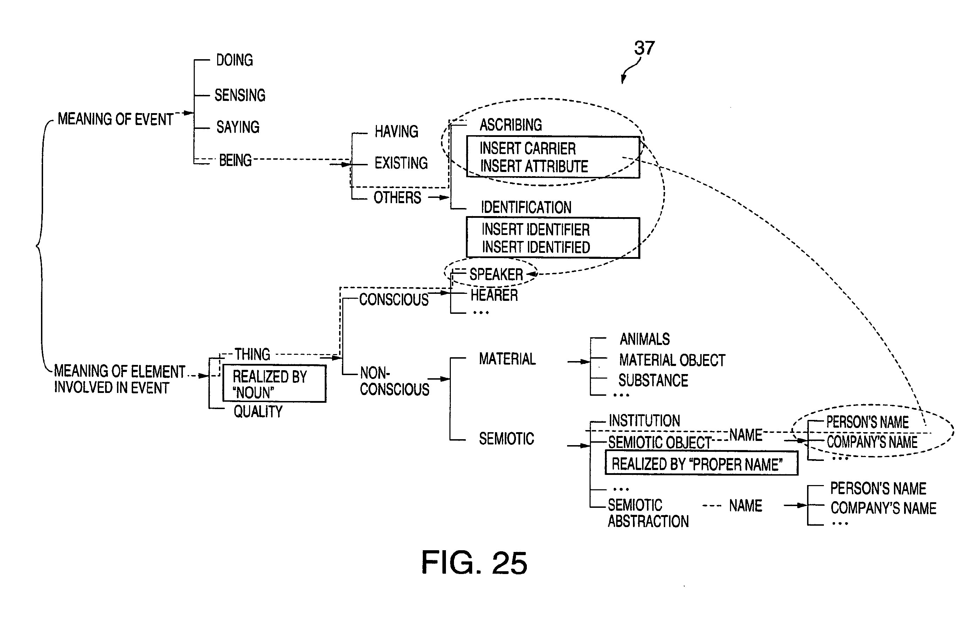

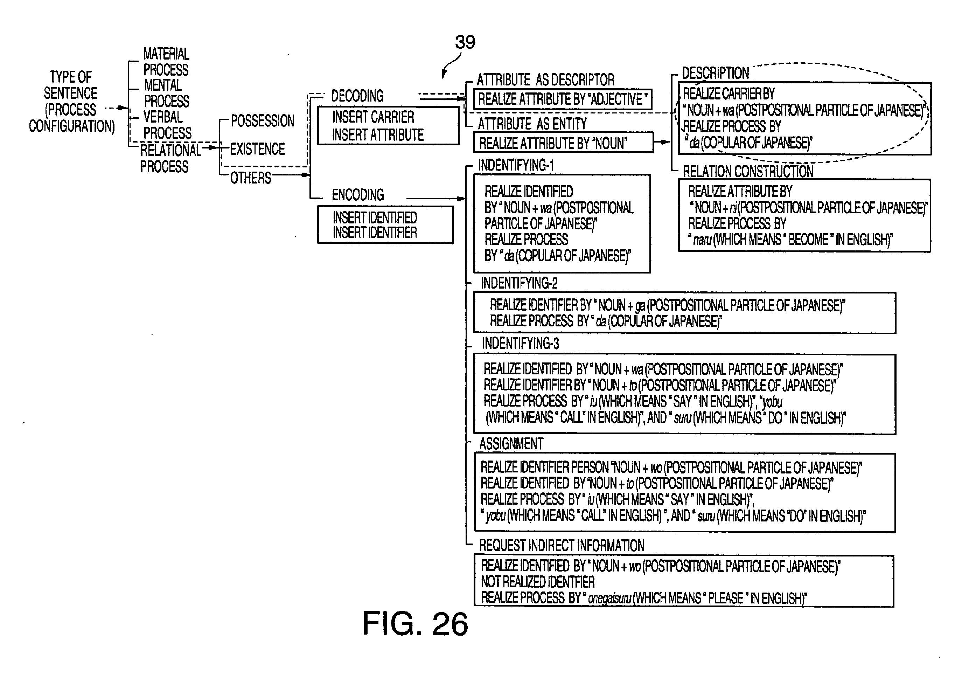

That is, referring to the client meaning base 37, a semantic role corresponding to the semantic feature in the local plan is identified (the above described step 607), and moreover, referring to the client lexico-grammar base 35, a lexico-grammatical feature corresponding to the semantic role is identified (the above described step 608). Furthermore, at this time, in the client meaning base 37, a semantic feature and semantic role of a portion shown by a dotted line in FIG. 25 are selected, and in the client lexico-grammar base 35, a lexico-grammatical feature and semantic role of a portion shown by a dotted line in FIG. 26 are selected.

If an example of a language text having analogous situation feature and semantic feature (local plan) has been found referring to the client corpus 42, subsequent processes can be omitted by utilizing the wording in the example (corresponding to an example of processing in FIG. 23).

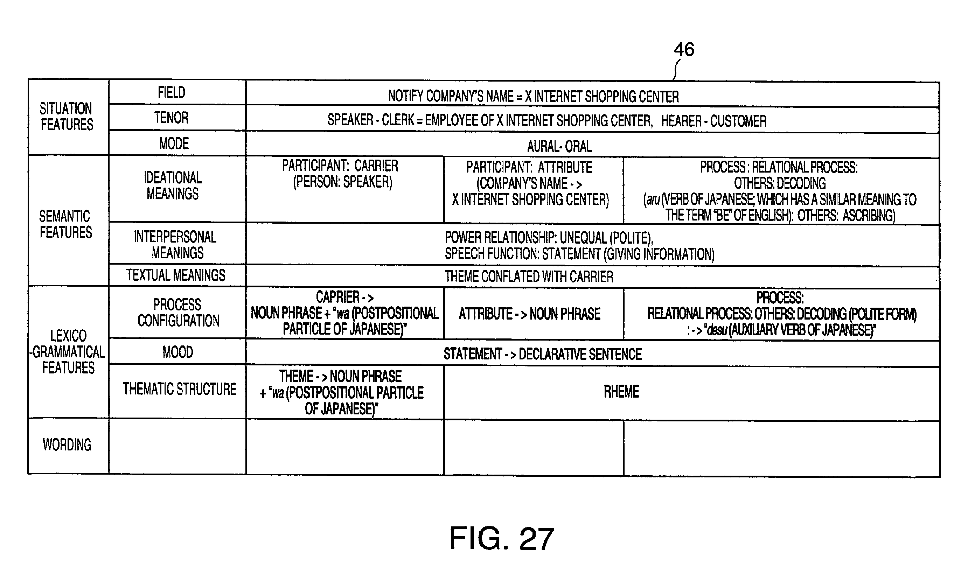

FIG. 27 shows an example of a language text information which is obtained in a process for generating such a language text. In FIG. 27, a lexico-grammatical feature is shown by a bold type. As can be seen from the bold type portion, a certain lexico-grammatical feature expresses only that a specific semantic role is embodied by a noun phrase and that a postpositional particle of Japanese "*wa*" is arranged after the noun phrase, and there are some cases where it is not possible to define a concrete word. In that case, referring to the client electronic dictionary 31, a language text having the semantic feature in the local plan and the lexico-grammatical feature is identified (the above described step 609).

In the client electronic dictionary 31, the dictionary items shown in FIGS. 7E through 7G are retrieved by searching a heading word wherein the lexico-grammatical information and semantic information of dictionary items include the same items as those of the lexico-grammatical feature and semantic feature.

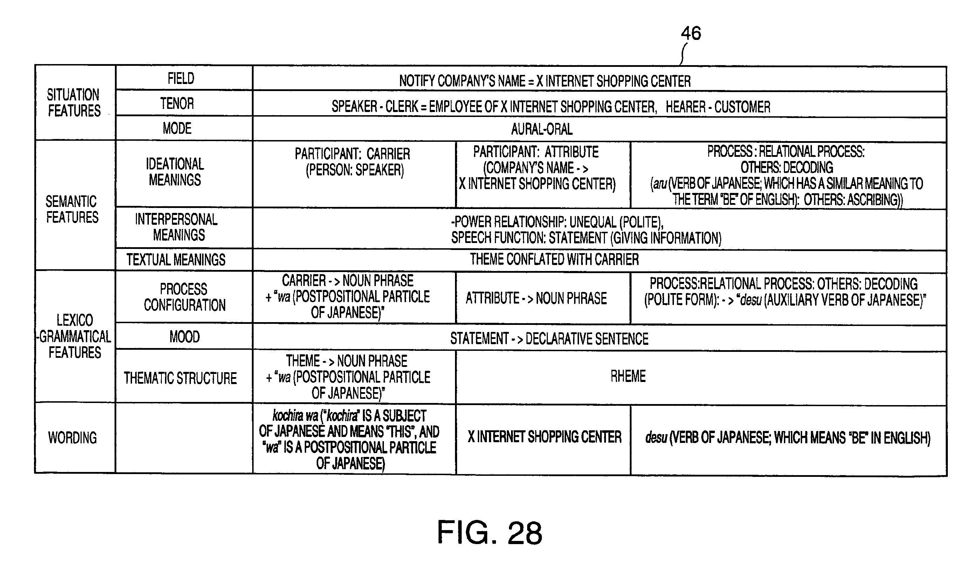

Therefore, the wording expressing the semantic feature in the local plan is determined by combining the lexico-grammatical feature with the dictionary item (the above described step 610). Furthermore, the above described wording prepared on the basis of the local plan and the lexico-grammatical feature is shown in FIG. 28.

When the wording is thus obtained, generation of the language text is completed.

Furthermore, referring to the client corpus 42, it is verified whether an example of a language text having the same wording exists. If it exists, a language text information on the wording is registered in a corpus item of the wording. If it does not exist, a corpus item of the wording is newly prepared, and information on a language text having the wording is registered therein (the above described step 611).

Finally, the wording obtained in the above described processing is delivered to the client secretary agent 17 as a language text which is generated in accordance with the local plan (the above described step 612).

### [2.2.2.3 Translation of Language Text]

Translations of a language text include a translation between different kinds of languages, and a translation into a language serving as a standard language from a certain regional dialect of a language in the same country.

Such a translation of the language text is carried out by the above described understanding of the meaning of the language text and generation of the language text in the client meaning processing mechanism 14 of the client language computer 12. That is, in the local plan obtained by understanding the original text, values relating to situation features and semantic features are held as they are, and the values of the lexico-grammatical feature are changed to values of a lexico-grammatical feature of a language serving as an object to be translated. As a result, a local plan in a different kind of language or the like is prepared. By generating a language text on the basis of this new local plan, a translation into a different kind of language or a language serving as the standard language from the original text is carried out. Furthermore, when the language text is generated, a reference to the client corpus 42 is made, and it is verified on the basis of the local plan whether an analogous language text has been already generated. If it has been generated, the language text is partially modified to be delivered to the client secretary agent 17 as a translated text.

### [2.2.3 Language Application]

In the client-oriented language computing system 10 shown in FIG. 1, the client language computer 12 has a language application 15 for providing various services by instructions from the client-oriented language operating system 16.

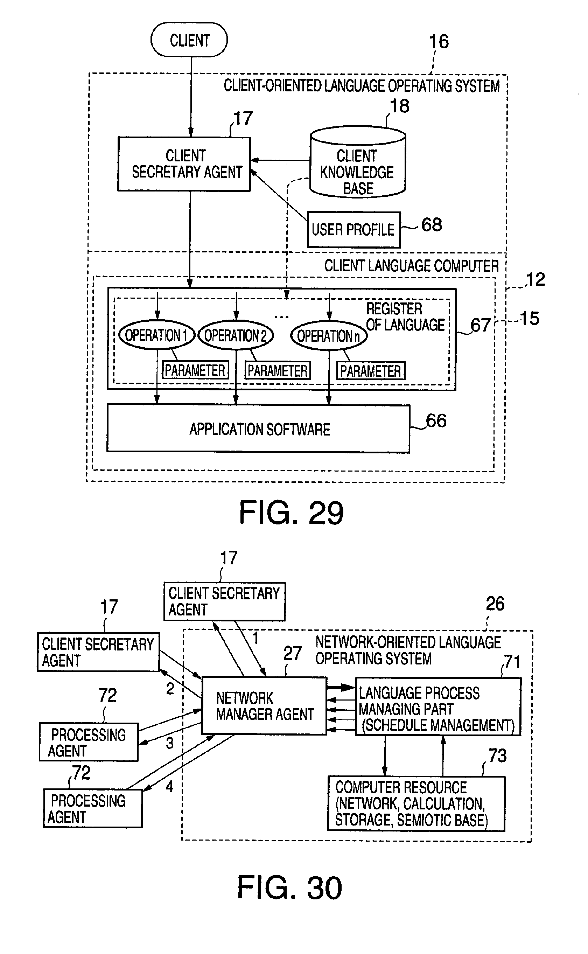

FIG. 29 is a diagram for explaining a language application 15 which is provided by the client language computer 12 of the client-oriented language computing system 10. As shown in FIG. 29, the language application 15 has the existing application software (resource body) 66 which operates on the existing platform 11 (see FIG. 1), and a language interface 67 for connecting the existing application software 66 to instructions based on a language of the client-oriented language operating system 16 (see FIG. 1).

To the language application 15, information on the register of a language which is adapted to assign the turn or phrase and expression of a language (e.g., a wording when a graphic is drawn, a wording when a word processor is utilized, a wording when a network is utilized), which is frequently used when the language application 15 is used, is given.

The client secretary agent 17 determines the register of the language, and its situation type from the language text which is provided from the client. In the client knowledge base 18, the relationship between language applications 15 and situation types, together with the procedure for operating the language application and parameters required in the operation, is stored as knowledge. The client secretary agent 17 refers to the client knowledge base 18 to determine as to which language application 15 is used at a client's request. In addition, the functions of each of language application and a method for operating the application are explained by a language. If a useful application must be determined from a plurality of language applications, it is possible to determine the useful application by accessing each language application by the everyday language. The determined language application has information on the register of the language, and it is determined which operation command is used among operation commands prepared in the language interface.

The language interface 67 of the language application 15 is an interface for mediating between the existing application software 66 and the client secretary for accessing and operating the application software 66 by instructions based on the language, and connects the operation items of the usual application software to the instructions based on the language of the client secretary agent 17.

Furthermore, the language interface 67 has a specification adapted to commonly use all the existing application software. Part of the language interface 67 is assigned so as to correspond to the register of an individual language, in each application software. In addition, a group of commands for operating the application software 66 is a set of instructions based on a simple language required for operation. The group of commands, together with parameters of degrees of control input, are used for allowing a fine control of the application software 66.

In FIG. 28, if the client request of the client secretary agent 17 by the everyday language that it provides services expected by the client, the client secretary agent 17 interprets the intention of the client's request having abstract degrees of various levels, and realizes the client's request by using various language applications 15.

Specifically, referring to a user profile 68 in accordance with the operating method attached to the application software 66, the operating procedure and operating contents (values of parameters serving as control inputs, etc.) of the application software 67 are determined in view of client's preferences (e.g., color). The operation sequence and contents thus determined are fed to the application software 66 via the language interface 67 to be executed.

Furthermore, with respect to the use of the language application 15, since the client secretary agent 17 having accepted the client's request carried out the selection of the application software 66, scheduling and so forth in view of the client' request, it is not required for the client to consider what application software 66 is utilized by the client's own request, so that the client only makes the client's own request to the client secretary agent 17.

Furthermore, the procedure for operating the application software 66 is structured, and the structure of the operating procedure exists every job (task) serving as an object. The client secretary agent 17 selects a job for realizing the client's request, and carries out operation in accordance with the procedure of the task. Simultaneously, the details of the operating contents are also determined in view of the language text provided by the client and the client preferences.

### [3. Network-oriented language Computing System]

### [3.1. Network-oriented language Operating System]

### [3.1.1. Outline]

In the network-oriented language computing system 20 shown in FIG. 1, the network-oriented language operating system 26 has a network manager agent 27 for exchanging a language text from and to the client secretary agent 17, and can manage a process relating to the processing of the language texts of a plurality of clients on the network-oriented language computer 12, and manage the language file 29 including the language texts.

Specifically, the network manager agent 27 of the network-oriented language operating system 26 exchanges language data from and to the client secretary agent 17 of the client-oriented language operating system 16 to collectively accept requests (inquiries and requests for execution of jobs) from the client secretary agent 17 to schedule a process relating to the processing of the language texts to realize the client's requests. In addition, the network manager agent 27 manages the language file 29, which serves as a common file on the network or a file for client arranged on the network, to retrieve and present the language file 29 in accordance with the requests of the client secretary agent 17 and various processing agents on the network.

### [3.1.1. Network Manager]

The network manager agent 27 is an agent which is obtained by generalizing the client secretary agent 17 for providing services on the network, and complies with the inquiries and requests for execution of jobs from the client secretary agent 17. Furthermore, these inquiries and requests for execution of jobs are fed from the client secretary agent 17 to the network manager agent 27 in accordance with a language communication protocol. At this time, the register of the language which is understood by the client secretary agent 17 on the basis of the language text provided by the client, and the situation type corresponding to the register of the language are also fed to the network manager agent 27.

In addition, the network manager agent 28 manages various processing agents in the network-oriented language operating system 26, and the client secretary agent 17 which have moved from the client-oriented language operating system 16 to the network-oriented language operating system 27.

Specifically, management is as follows.
(1) Management of Agent
   Generation of templates of the client secretary agent 17 and various processing agents, and utilization, departure and disappearance of processing agents in the network-oriented language operating system 20, are carried out.
(2) Retrieval of Agent
   Another client secretary agent and processing agent on the network, which is adapted to execute jobs requested from the client secretary agent 17, are retrieved from a meta-data base. The network knowledge base 28 stores therein the relationship between agents and situation types, together with information on agent's abilities and locations. The network manager agent 27 refers to the network knowledge base 28 to determine what processing agent is requested for executing a job at a request from the client secretary agent 17. Furthermore, if an appropriate processing agent does not exist, the network manager agent of another network-oriented language computer system is requested for executing the job.
(3) Mediation By Agent
   A plurality of client secretary agents are associated with the processing agent on the network for carrying out planning and mediation for executing the job. The network knowledge base 28 stores therein knowledge relating to planning, which is relevant to the situation type and the contents of the job. The network manager agent 27 determines what processing agent on the network is assigned to any job, while referring to the network knowledge base 28 if necessary. In addition, the results of answers from the respective processing agents are integrated, and the results of execution of the job are fed to the client secretary agent 17 which first made the request.

### [3.1.2. Network Knowledge Base]

The network knowledge base 25 is designed to store therein knowledge to which the network manager agent 27 refers when the network manager agent 27 executes a job at a request from the client secretary agent 17. At a request from the network manager agent 27, knowledge required for the situation is retrieved and applied. Furthermore, the network knowledge base 28 is added and updated by the network manager agent 27. In addition, knowledge stored in the network knowledge base 28 has been indexed by the network semiotic base 23 of the network language computer 22.

### [3.1.3 Language Process Management]

The network-oriented language operating system 26 has a language process managing part for managing a process relating to the processing of language texts of a plurality of clients on the network language computer 12.

FIG. 30 is a schematic diagram for explaining a language process management in the network-oriented language operating system 26. As shown in FIG. 30, the network-oriented language operating system 26 has a language process managing part 71, and manages requests (inquiries and requests for execution of jobs) from the client secretary agent 17 and various processing agents 72, which have been accepted by the network manager agent 27, to carry out a scheduling for assigning a computer resources 73 to the client secretary agent 17 and the various processing agents 72. Specifically, the language process managing part 71 carries out a response schedule management with respect to the requests from the plurality of client secretary agents 17 and various processing agents 72, and gives preferences to responses to the requests to assign the computer resources 73 in accordance with the preferences.

### [3.1.4. Language File Management]

The network-oriented language operating system 26 has a language file managing part for managing the common file on the network and the language file 29 which is arranged on the network and which serves as a file for client.

The language file managing part defines the relationship between the contents of titles and abstracts, which are included in the language file 29, and the network situation base to classify and manage what domain and job (task) use the language file 29, and retrieves and presents the language file 29 in accordance with the requests from the client secretary agent 17 and various processing agents.

### [3.1.5. Language Protocol Communication Management]

The network-oriented language operating system 26 manages a language protocol communication between the client-oriented language operating system 16 of the client-oriented language computing system 10 and the network-oriented language operating system of another network-oriented language computing system, in accordance with a language communication protocol.

Before describing the language communication protocol, a general communication protocol currently used on Internet will be described below.

The communication protocol means a "protocol" required for two systems to communicate with each other, and comprises a structure (format) on information to be handled, and the procedure for transmitting and receiving the information. In order to communicate between computers, it is required to define fine rules in the procedure for establishing communication on the network (physical establishment of the network, establishment of exchange of logic symbols, establishment of delivery route, establishment of transmission and receiving, etc.) and in the format of data to be transmitted.

At present, standards of such a protocol are generally divided into two standards (called international standard protocol and industry standard protocol). As a model of the international standard protocol, the OSI (Open System Interconnection) reference model is adopted. The OSI reference model is a model for dividing two systems for communicating with each other into seven hierarchies to define functions in hierarchies, interfaces between hierarchies, and protocol between the same hierarchies. The OSI reference model has been proposed by the ISO (International Standardization Organization) to aim at an integrated standard for protocol, and is used as a framework of another protocol or a model serving as an object to be compared.

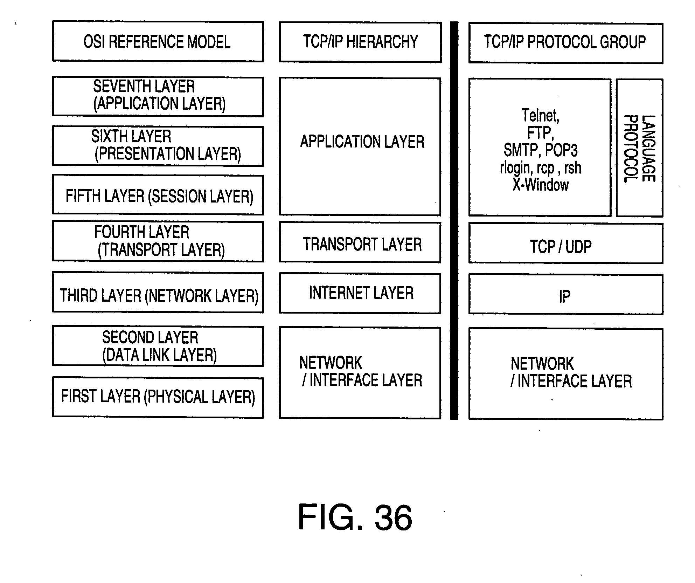

A protocol generally used on the current Internet is called an industry standard protocol, and a protocol for Unix network called TCP/IP has spread. As shown in FIG. 36, the TCP/IP protocol has a hierarchical structure which is slightly different from that of the OSI standard model, and generally has a four-layer structure.

The language communication protocol is mounted as one application protocol of a TCP/IP protocol group shown in FIG. 36, and serves as a main protocol used for the everyday language-based computing system 1 shown in FIG. 1. By this language communication protocol, all of components of the everyday language-based computing system 1 carries out a communication. Furthermore, the TCP/IP protocol group used on the existing Internet can be indirectly utilized from the language communication protocol by exchanging data from and to an agent, who makes a specialty of the use of the TCP/IP protocol group, in accordance with the language communication protocol. In addition, the procedure for transmitting and receiving information in the language communication protocol is the same as an interaction process which is carried out by the natural language by humans. It is supposed that communicating objects include humans as well as all network resources. Thus, it is possible to communicate via an agent in accordance with the inherent communication protocol of the network resource.

Furthermore, the language communication protocol is ruled in order to transmit the everyday language, which is usually used by humans, as it is. The language communication protocol includes the existing network protocol and communication protocols between agents, and is a protocol for distributing the language system resources of the semiotic base at client's requests or for realizing understanding of the meaning of a language text, generation of a language text and translation of a language text on the network.

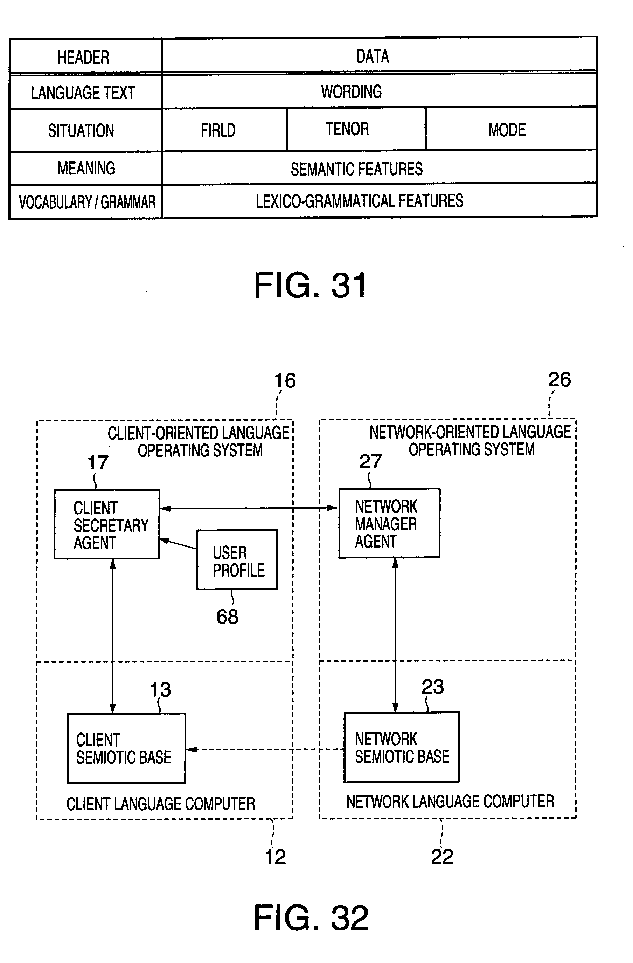

FIG. 31 shows an example of a language communication protocol. As shown in FIG. 31, in the data specification of the language communication protocol, data indicative of the meaning of language text data obtained on the basis of the language system resources of the semiotic base are added to the language text data. The specification of data indicative of the meaning of the language text data is the same as that of the language text information in the semiotic base. The relationship between a language system and a context surrounding the language system is the data specification of the language communication protocol as it is. The data specification comprises a header part, and a data part including a turn of a language text, a situation feature, a semantic feature and a lexico-grammatical feature.

Furthermore, in the data portion, the "language text" layer includes the wording of actual language texts. The "situation" layer includes concrete values concerning fields, tenors and modes of language texts. The "vocabulary/grammar" layer includes values wherein lexico-grammatical features of language texts have been analyzed. The "meaning" layer includes concrete values of semantic features of language texts obtained by taking lexico-grammatical features corresponding to situation features. Furthermore, there is a restraining relationship between the "situation" layer, the "meaning" layer and the "vocabulary/grammar" layer.

Understanding of the meaning of a language text, generation of a language, and translation of a language text are carried out on the basis of language data exchanged in accordance with a language communication protocol. In particular, when a language text is translated, a lexico-grammatical feature to be transmitted to the other party is selected by the value of a tenor of the "situation" layer without damaging the meaning of the original text, to be transmitted as language data according to the language communication protocol.

As an example, when clients A and B who speak different languages exits and if the client A communicates with the client B, a value of a fellow between "foreigners" is selected as the tenor between the clients A and B, and the meaning of the language text of the client A is expressed by the lexico-grammatical resources of the language, which is spoken by the client B, without damaging the meaning of the language text of the client A. Similarly, when clients A and B speak different regional dialects, the regional dialect of the client A is translated into the regional dialect of the client B, so that a smooth communication is realized. In addition, when a professional communicates with a nonprofessional, difficult expression is translated into expression adapted to be understood by nonprofessionals, so that communication can be smooth. Similarly, a client can request of the client secretary agent 17 that it translates a language text that the client want to translate.

Furthermore, in the client-oriented language computing system 10, language system resource required when the client secretary agent 17 understands the meaning of a language text provided by the client and generates a language text, is the client semiotic base 13 by default. However, if the language system resource required to understand the meaning of the language text and generate the language text is insufficient (that is, if the client secretary agent 17 cannot understand the meaning of the language text, which is provided by the client, since part of language data according to the language communication protocol is insufficient), it is possible to request of the client secretary agent 17 that it transmits the language system resource in the network semiotic base 23 to the network manager agent 27 as shown in FIG. 32. Thus, the client semiotic base 13 and the network semiotic base 23 are associated with each other. Furthermore, the language system resource transmitted from the network semiotic base 23 is stored in the client semiotic base 13, so that the inherent client semiotic base 13 of the client is formed.

### [3.2. Network Language Computer]

### [3.2.1. Network Semiotic Base]

### [3.2.1.1. Outline]

In the network-oriented language computing system 20 shown in FIG. 1, the network semiotic base 23 is an enlarged version of the client semiotic base 13 of the client-oriented language computing system 10. Similar to the client semiotic base 13, the network semiotic base 23 comprises a network electronic dictionary, a network lexico-grammar base, a network meaning base, a network situation base and a network corpus. Furthermore, each part of the client semiotic base 13 includes all information in the client semiotic base 16 in the client-oriented language computing system 10 which is connected to the network-oriented language computing system 20 via the network 2.

Mainly with respect to different points from the client semiotic base 13, the respective parts of the network semiotic base 23 will be described below.

### [3.2.1.2. Network Electronic Dictionary]

The network electronic dictionary basically has the same configuration as that of the client electronic dictionary 31, and includes more dictionary items so as to cope with the analysis of various wording changed on the network. In the initial state, the network electronic dictionary includes vocabularies of everyday levels, as well as vocabularies of higher expert, such as brain science and law. In particular, the network electronic dictionary preferably sufficiently includes vocabularies which are relevant to functions and language programs of computers, so as not to obstruct the exchange of various processing agents on the network. In addition, if necessary, dictionary items may be imported from the electronic dictionary of the network semiotic base of another network-oriented language computing system.

### [3.2.1.3. Network Lexico-Grammar Base]

The network lexico-grammar base basically has the same configuration as that of the client lexico-grammar base 35, and includes more lexico-grammar base items so as to cope with the analysis of various wording exchanged on the network.

### [3.2.1.4. Network Meaning Base]

The network meaning base basically has the same configuration as that of the client meaning base 37, and includes more meaning base items so as to cope with the analysis of various meanings exchanged on the network.

### [3.2.1.5. Network Situation Base]

The network situation base basically has the same configuration as that of the client situation base 39, and includes more situation base items so as to cope with the analysis of various situations exchanged on the network. If necessary, the situation type and the generic structure of text may be imported from the network situation base of the network semiotic base of another network-oriented language computing system.

### [3.2.1.6. Network Corpus]

The network corpus basically has the same configuration as that of the client corpus 42, and includes more amounts and kinds of examples of language texts. Furthermore, in such a network corpus, all of exchanges of language texts between the client secretary agent 17 and the network manager agent 27 or between the network manager agent 27 and the processing agent, together with their lexico-grammatical features, semantic features and situation features, are recorded.

### [3.2.2. Network Meaning Processing Mechanism]

### [3.2.2.1. Outline]

In the network language computer 22, all of processes for language texts carried out by the network meaning processing mechanism 24 are carried out by using language system resources in the network semiotic base 23.

Timings in understanding the meaning of a language text, generating a language text and translating a language text using the network semiotic base 23 by means of the network meaning processing mechanism 24 will be enumerated below.
(1) Understanding of Meaning of Language Text
   (a) When the network manager agent 27 receives a question from the client secretary agent 17.
   (b) When the network manager agent 27 receives a language program which is modified by the client secretary agent 17.
   (c) When the network manager agent 27 receives the results of execution of a job.
(2) Generation of Language Text
   (a) When the network manager agent 27 answers a question from the client secretary agent 17 after understanding the question.
   (b) When the network manager agent 27 requests of various processing agents on the network that they do a job.
   (c) When the network manager agent 27 intends to derive necessary information from the client secretary agent 17 since the network manager agent 27 founds that necessary information falls short in order to execute a language program modified by the client secretary agent 17 although the network manager agent 27 understood the language program.
(3) Translation of Language Text
   (a) When processing agents using different kinds of languages are utilized.
   (b) When clients use a plurality of languages (including regional dialects) for communicating with each other via their client secretary agents 17.
   (c) When the support of the network manager agent 27 is required since it is found that necessary language system resources fall short in order to mediate communications between their client secretary agents 17 when clients use a plurality of languages (including regional dialects) for communicating with each other via the client secretary agents 17.
   (d) When a different speech of a client who is positioned to be a professional is translated into a speech of a level adapted to be understood by a client who is positioned to be a nonprofessional in the field.

Furthermore, although input/output data are different from each other in these processes, there are only two processes of understanding of the meaning of a language text and generation of a language text in view of the order of the processes carried out by using language system resources in the network semiotic base 23. The contents of the processes, mainly understanding of the meaning of a language text and generation of a language text, will be concretely described below.

### [3.2.2.2 Understanding of Meaning of Language Text]

If the network language computer 22 receives the results of execution of a job from a processing agent serving as a language text, from the network manager agent 27, the network meaning processing mechanism 24 of the network language computer 22 refers to a network corpus to verify whether the network corpus includes a language text analogous to a language text included in the results of execution of the job.

If an analogous language text is found in the network corpus, a semantic feature of the language text is delivered to the network manager agent 27 as the meaning of the language text included in the results of execution of the job, so that understanding of the meaning of the results of execution of the job is completed.

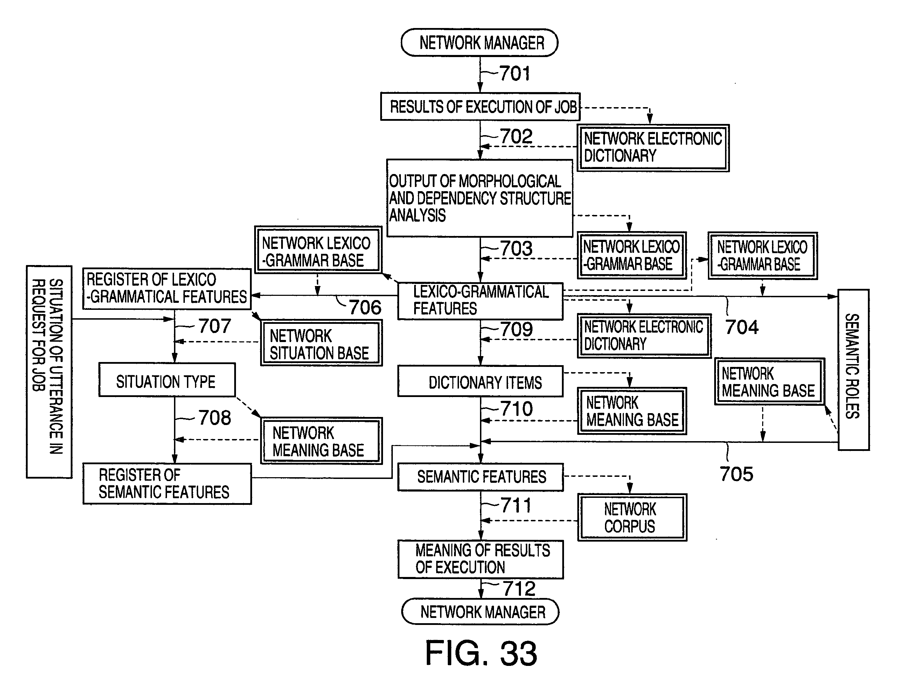

On the other hand, if any analogous language texts are not found in the network corpus, a processing shown in FIG. 33 is carried out.

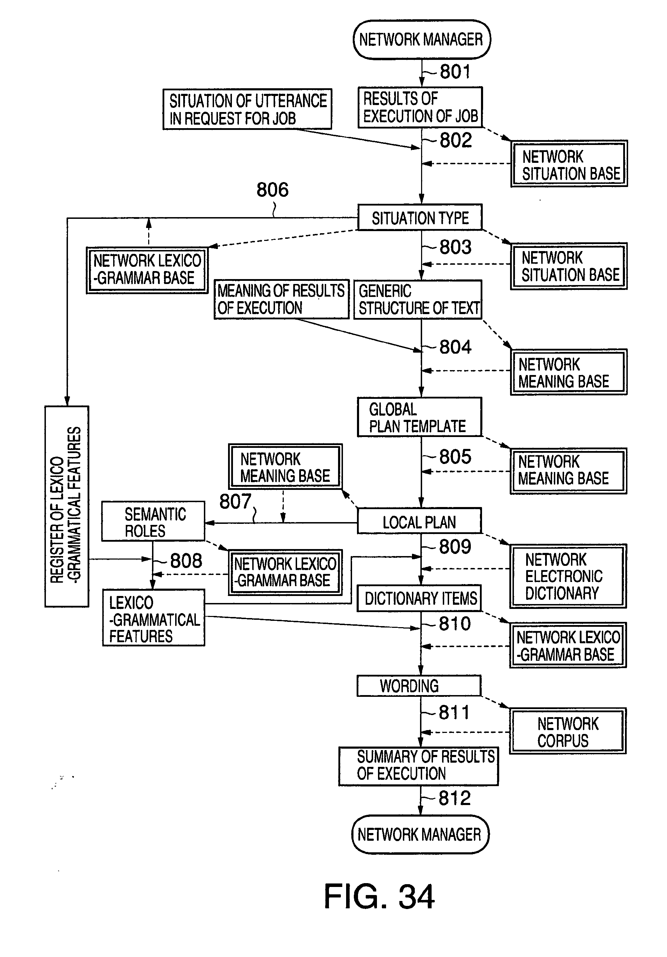

FIG. 33 is a flow chart for explaining a case where the whole network semiotic base 23 is used for understanding the meaning of the results of execution of a job. Furthermore, the flow chart of FIG. 34 shows the relationship between information (rectangular box line) serving as an object to be processed and the respective parts (rectangular double box line) of a client semiotic base used for processing, together with the flow (arrow) of control.

In FIG. 33, first, the network language computer 22 receives the results of execution of a job from the network manager agent 27 (step 701).

The network meaning processing mechanism 24 of the network language computer 22 refers to the network electronic dictionary to carry out a morphological analysis and a parsing with respect to a language text included in the results of execution of the job (step 702). Then, the network meaning processing mechanism 24 refers to the network lexico-grammar base to identify lexico-grammatical features from a string character having information on the results of the morphological analysis and parsing (step 703).

Thereafter, referring to the network lexico-grammar base to identify a semantic role adapted to express each of lexico-grammatical features obtained at step 703 (step 704).

In addition, referring to the network meaning base to identify a semantic feature adapted to have the semantic role obtained at step 704 (step 705).

On the other hand, referring to the network lexico-grammar base to identify its register, from lexico-grammatical features obtained at step 703 (step 706).

In addition, referring to the network situation base to identify a situation type corresponding to its register, from the register of the lexico-grammatical features, which is obtained at step 706 (step 707). Furthermore, at this time, if a situation (situation type) during generation of a language text can be seen, a reference to the situation is also made. If the meaning of the results of execution of the job received from the processing agent on the network is understood, a reference of a situation (situation type) when asking the processing agent to carry out the job is made.

Then, referring to the network meaning base, the register of a semantic feature, which corresponds to the situation type obtained at step 707, is identified (step 708).

On the other hand, referring to the network electronic dictionary to output dictionary items including the lexico-grammatical features obtained at step 703 (step 709).

In addition, referring to the network meaning base to extract semantic information included in the dictionary items obtained at step 709, to identify a semantic feature, which is adapted to actually have the semantic role obtained at step 704, in the range of the register of the semantic feature, which is obtained at steps 706 through 708 (step 710).

Thereafter, referring to the network corpus to verify whether the network corpus has an example of a language text having the same semantic feature. If it has the example, language text information is registered in the corpus item of the semantic feature, and if it does not have the example, a new corpus item is prepared to register language text information therein (step 711).

Finally, the semantic feature obtained in the above described processing is delivered to the network secretary agent 27 as the meaning of the results of execution of the job (step 712).

Furthermore, at the above described steps 701 through 712, the processes at steps 706 through 708 are carried out if any situation types have not been assigned, and are omitted if a concrete situation type has been set.

### [3.2.2.3. Generation of Language Text]

FIG. 34 is a flow chart for explaining generation of a language text when a summary of the results of execution of a job is reported. Furthermore, the flow chart of FIG. 34 shows the relationship between information (rectangular box line) serving as an object to be processed and the respective parts (rectangular double box line) of a network semiotic base used for processing, together with the flow (arrow) of control.

In FIG. 34, first, the network language computer 22 receives the results of execution of a job, from the network manager agent 27 (step 801).

The network meaning processing mechanism 24 of the network language computer 12 refers to the network situation base to identify a situation type during generation of a language text while referring to a situation type obtained during understanding of the language text in which execution of the job is described (step 802).

In addition, referring to the network situation base, a generic structure of text corresponding to the situation type during generation of the language text is identified (step 803).

Moreover, referring to the network meaning base, a global plan template, which is relevant to each situation of the generic structure of text, is identified (step 804).

Thereafter, referring to the network meaning base, the semantic feature obtained as the results of execution of the job is added to be filled in the slots of the global plan template, which is obtained at step 804, to prepare a local plan (step 805). Furthermore, if necessary, the meaning of the results of execution of the job is understood by the processing shown in FIG. 33, and a semantic feature obtained as a result is used.

Thus, the situation type and the local plan during generation of the language text are obtained.

At this time, referring to the network corpus, it is verified whether a language text having analogous situation feature and semantic feature exists. If an example of an analogous language text in the network corpus is found, the wording of the language text can be taken out as a summary of the results of execution of the job. Thus, the reporting of the results of execution of the language program is completed.

On the other hand, if any language texts having analogous situation feature and semantic feature have not been found in the network corpus, a reference to the network lexico-grammar base is made to identify the register of a lexico-grammatical feature, which corresponds to the situation type during generation of the language text obtained at step 802 (step 806).

In addition, referring to the network meaning base, a semantic role adapted to be possessed by the semantic features in the local plan obtained at step 805 is identified (step 807).

Moreover, referring to the network lexico-grammar base, a lexico-grammatical feature adapted to actually have the semantic role identified at step 807 is identified in the range of the register of the lexico-grammatical feature which is obtained at step 806 (step 808).

Thus, the situation type, local plan and lexico-grammatical feature during generation of the language text are obtained.

At this time, referring to the network corpus, it is verified whether a language text having analogous situation feature, semantic feature and lexico-grammatical feature exists. If an example of an analogous language text is found in the network corpus, the wording of the example can be taken out as a summary of the results of execution of the job. Thus, the process for making the report of the results of execution of the job is completed.

On the other hand, if any language texts having analogous situation features, semantic features and lexico-grammatical features have not been found in the network corpus, a reference to the network electronic dictionary is made to output a dictionary item including the semantic feature in the local plan obtained at step 805 and the lexico-grammatical feature obtained at step 808 (step 809).

In addition, referring to the network lexico-grammar base, the lexico-grammatical feature obtained step 808 is combined with the dictionary item obtained at step 809 to prepare a wording (step 810).

Thereafter, referring to the network corpus, it is verified whether an example of a language text having the same wording exists. If it exists, language text information having the wording is registered in a corpus item having the wording. If it does not exist, a new corpus item is prepared, and a language text information having the wording is registered therein (step 811).

Finally, the wording obtained in the above described processing is delivered to the network secretary agent 27 as a summary of the results of execution of the job (step 812).

Furthermore, the processing at steps 801 through 805 of the above described steps 801 through 812 is carried out if the situation type has not been assigned. If a concrete situation type has been set, this processing is omitted by utilizing the generic structure of text and the global plan template.

### [3.2.3. Language Resource]

In the network-oriented language computer system 20 shown in FIG. 1, the network language computer 22 has a language resource 25 for providing various services by instructions from the network-oriented language operating system 26. The language resource 25 is a common resource adapted to be accessed by a language, by adding a language interface for connecting the existing resources, such as applications (including electronic libraries, server programs, various data bases and so forth), programming languages, libraries and utilities, to commands based on the language of the network-oriented language operating system 26, to the existing resource.

To the language resource 25, information on the register of languages adapted to assign the wording and expression of languages (e.g., a wording when a data base on the network is used, a wording when a programming language is used), which are frequency used during the use of the language resource 25, is added.

In the network knowledge base 28, the relationship between the language resource 25 and situation types, together with the procedure for operating the language resource and parameters required in the operation, is stored. The network manager agent 27 refers to the network knowledge base 27 to determine what language resource 25 is used at a request from the client secretary agent 17. In addition, the functions of each of the language resources 25 and a method for operating each of the language resources 25 are explained by a language. If a useful language resource must be determined from a plurality of language resources, it is possible to determine the useful language resource by accessing each language resource by the everyday language. The determined language resource has information on the register of language interface, and it is determined which operation command is used among a group of operation commands prepared in the language interface.

Thus, according to this preferred embodiment, since understanding of the meaning of a language and generation of a language are carried out by the meaning processing mechanisms 14, 24 using the semiotic bases 13, 24 wherein the system of meanings of the everyday language is structured, all information processing can be executed and managed by the everyday language. Therefore, even if the client does not have expertise about computers and so forth, it is possible to easily operate the system by a language (everyday language) which is usually used by the client, and it is possible to flexibly and precisely grasp a client's intention to process information.

In addition, according to this preferred embodiment, since the language interface is provided in the existing resource (including application software and so forth), all of a programming language, application software, file, data base, contents of web information, which are required for processing information by a computer, can be accessed by a language to be utilized.

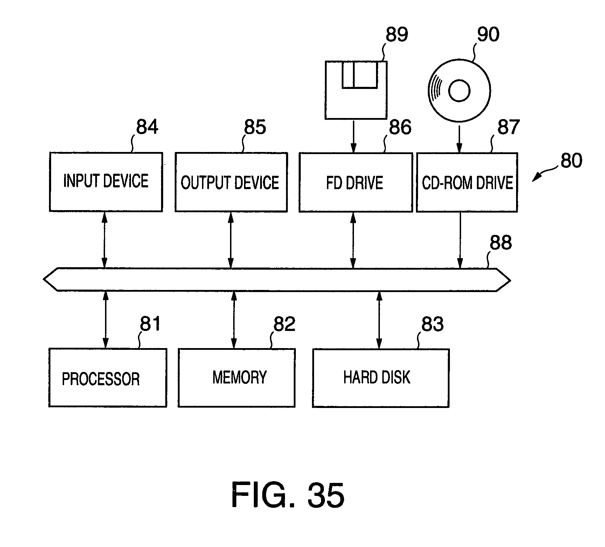

Furthermore, in the above described preferred embodiment, the client-oriented language computing system 10 (the client language computer 12 and the client-oriented language operating system 16) and the network-oriented language computing system 20 (the network language computer 22 and the network-oriented language operating system 26) can be realized as a program which operates on a computer 80 shown in FIG. 35. The computer 80 comprises a bus 88, a processor 81 connected to the bus 88, a memory 82, a hard disk 83, and peripheral apparatus connected to the bus 88 (input devices 84, such as a keyboard and a mouse, output devices 85, such as a display and a printer, an FD drive 86, and a CD^ROM drive 87). The above described program is stored in a computer-readable recording medium, such as the memory 82, the hard disk 83, a flexible disk 89 or a CD-ROM 90, and can be sequentially read out of the processor to be executed to realize the above described function.

Furthermore, in the above described preferred embodiment, while both of the client language computer 12 of the client-oriented language computing system 10 and the network language computer 22 of the network-oriented language computing system 20 have been realized as virtual machines which are realized on the existing platform comprising the existing hardware and operating system, the present invention should not be limited thereto, but they may be realized as hardware.

As described above, according to the present invention, since understanding of the meaning of a language text and generation of a language text are carried out by the meaning processing mechanism using the semiotic base wherein the system of meanings of the everyday language is structured, all information processing can be executed and managed by the everyday language. Therefore, even if the client does not have expertise about computers and so forth, it is possible to easily operate the system by a language (everyday language) which is usually used by the client, and it is possible to flexibly and precisely grasp a client's intention to process information.

While the present invention has been disclosed in terms of the preferred embodiment in order to facilitate better understanding thereof, it should be appreciated that the invention can be embodied in various ways without departing from the principle of the invention. Therefore, the invention should be understood to include all possible embodiments and modification to the shown embodiments which can be embodied without departing from the principle of the invention as set forth in the appended claims.

## Claims

1. An everyday language-based computing system comprising a language computer for processing a language text described or dictated by an everyday language,
said language computer having a semiotic base, in which a system of meanings of the everyday language is structured, and a meaning processing mechanism for understanding a meaning of a language text and generating a language text on the basis of said semiotic base.

2. An everyday language-based computing system as set forth in claim 1, wherein said semiotic base of said language computer has an electronic dictionary for holding a plurality of dictionary items including lexico-grammatical information and semantic information, a lexico-grammar base for systematically holding a plurality of lexico-grammatical features of a language and a plurality of semantic roles corresponding thereto, and a meaning base for systematically holding a plurality of semantic features of a language and a plurality of semantic roles corresponding thereto, said lexico-grammatical features held in said lexico-grammar base and said semantic features held in said meaning base being associated with said lexico-grammatical information and semantic information of each of said dictionary items held in said electronic dictionary, respectively,
said meaning processing mechanism of said language computer refers to said electronic dictionary, said lexico-grammar base and said meaning base, to identify a semantic role corresponding to a lexico-grammatical feature of a character string which is included in a language text serving as an object to be processed, and to identify a semantic feature corresponding to the identified semantic role, so that said meaning processing mechanism understands a meaning of the language text on the basis of the identified semantic feature.

3. An everyday language-based computing system as set forth in claim 2, wherein said semiotic base of said language computer further includes a situation base for systematically holding a plurality of situation types indicative of a situation, in which a language is used, and a plurality of situation features corresponding thereto, both of said lexico-grammar base and said meaning base holding a plurality of registers of a language, which are associated with the situation types held in said situation base,
said meaning processing mechanism of said language computer refers to said meaning base, said lexico-grammar base and said situation base, to identify a situation type corresponding to a register of a lexico-grammatical feature of a character string which is included in a language text serving as an object to be processed, to identify a register of a semantic feature corresponding to the identified situation type, and to identify a semantic feature corresponding to the identified semantic role within the identified register of semantic feature, so that said meaning processing mechanism understands a meaning of the language text on the basis of the identified semantic feature.

4. An everyday language-based computing system as set forth in claim 1, wherein said semiotic base of said language computer further includes a corpus for holding a plurality of language texts serving as examples of exchange of a language, together with a plurality of semantic features of a language, and
said meaning processing mechanism of said language computer refers to said corpus, to retrieve an example of a language text, which is analogous to a language text serving as an object to be processed, so that said processing mechanism understands a meaning of the language text on the basis of a semantic feature of the retrieved example of the language text.

5. An everyday language-based computing system as set forth in claim 1, wherein said semiotic base of said language computer has a situation base for systematically holding a plurality of situation types indicative of a situation, in which a language is used, and a plurality of situation features corresponding thereto, a meaning base for systematically holding a plurality of semantic features of a language and a plurality of semantic roles corresponding thereto, and a corpus for holding a plurality of language texts serving as examples of exchange of a language, together with the situation features and semantic features of a language, said situation base further holding a plurality of generic structures of text corresponding to said situation types, and said meaning base further holding a plurality of registers of a language, which are associated with the situation types held in said situation base, and a plurality of global plan templates which are associated with the generic structures of text held in said situation base,
said meaning processing mechanism of said language computer refers to said situation base and said meaning base, to identify a global plan template, which is relevant to a generic structure of text corresponding to a situation type during generation of a language text, and to prepare a local plan on the basis of the identified global plan template and of a predefined semantic feature, so that said meaning processing mechanism generates a language text on the basis of the prepared local plan and the examples of the language texts held in said corpus.

6. An everyday language-based computing system as set forth in claim 5, wherein said semiotic base of said language computer further includes a lexico-grammar base for systematically holding a plurality of lexico-grammatical features of a language and a plurality of semantic roles corresponding thereto, said lexico-grammar base holding a plurality of registers of a language, which are associated with said situation types held in said situation base, and said corpus holding a plurality of language texts serving as examples of exchange of a language, together with the situation features, semantic features and lexico-grammatical features of a language,
said meaning processing mechanism of said language computer refers to said meaning base to identify a semantic role corresponding to a semantic feature included in said local plan, and refers to said lexico-grammar base, to identify a register of a lexico-grammatical feature corresponding to a situation type during generation of a language text, and to identify a lexico-grammatical feature corresponding to the identified semantic role within the register of the identified lexico-grammatical feature, so that said meaning processing mechanism of said language computer generates a language text on the basis of the identified lexico-grammatical feature, said local plan and the examples of the language texts held in said corpus.

7. An everyday language-based computing system as set forth in claim 6, wherein said semiotic base of said language computer further includes an electronic dictionary for holding a plurality of dictionary items including lexico-grammatical information and semantic information, said lexico-grammatical features held in said lexico-grammar base and said semantic features held in said meaning base being associated with said lexico-grammatical information and said semantic information of each of said dictionary items held in said electronic dictionary, respectively,
said meaning processing mechanism of said language computer refers to said electronic dictionary to output a dictionary item including the semantic feature included in said local plan and the identified lexico-grammatical feature, and refers to said lexico-grammar base to combine the identified lexico-grammatical feature with the outputted dictionary item, so that said meaning processing mechanism of said language computer generates a language text.

8. An everyday language-based computing system as set forth in claim 1, further comprising a language operating system for managing said language computer by an everyday language.

9. An everyday language-based computing system as set forth in claim 8, wherein said language operating system has a secretary agent for interactively exchanging a language text between a user and said language computer.

10. An everyday language-based computing system as set forth in claim 9, wherein said secretary agent is prepared as a plurality of candidates of secretary agents every specialized domain, and a desired candidate of secretary agent is selected by an instruction from the user.

11. An everyday language-based computing system as set forth in claim 9 or 10, wherein said language operating system further includes a knowledge base which is managed by said secretary agent.

12. An everyday language-based computing system as set forth in claim 11, wherein said knowledge base is associated with said semiotic base of said language computer.

13. An everyday language-based computing system as set forth in claim 9, wherein said language operating system has a user interface for personifying said secretary agent to present the personified secretary agent together with a virtual space which is prepared by simulating a user's accommodation space.

14. An everyday language-based computing system as set forth in claim 13, wherein said user interface is set in a desired form by an instruction from the user.

15. An everyday language-based computing system as set forth in claim 8, wherein said language operating system manages a process relating to a processing of a language text on said language computer.

16. An everyday language-based computing system as set forth in claim 8, wherein said language operating system manages a language file including a language text.

17. An everyday language-based computing system as set forth in claim 8, wherein said language operating system exchanges language data from and to another everyday language-based computing system.

18. An everyday language-based computing system as set forth in claim 17, wherein said language data include language text data and data indicative of the meaning thereof.

19. An everyday language-based computing system as set forth in claim 1, wherein said language computer is a virtual machine which is realized on the existing platform.

20. An everyday language-based computing system as set forth in claim 8, wherein said language computer further includes a language resource for providing various services by an instruction from said language operating system, said language resource having a resource body operated on the existing platform, and a language interface for connecting the resource body to a command based on a language of said language operating system.

21. An everyday language-based computing system comprising:
a client computing system; and
a network computing system connected to said client computing system,
said client computing system including a client language computer for processing a language text described or dictated by an everyday language, and a client-oriented language operating system for managing said client language computer by the everyday language,
said network computing system including a network language computer for processing a language text which is exchanged from and to said client computing system, and a network-oriented language operating system for exchanging language data from and to said client computing system and for managing said network language computer by the everyday language, and
said client-oriented language operating system and said network-oriented language operating system exchanging language data therebetween in accordance with a language communication protocol.

22. An everyday language-based computing system as set forth in claim 21, wherein said language data exchanged in accordance with said language communication protocol include language text data and data indicative of the meaning thereof.

23. An everyday language-based computing system as set forth in claim 21, wherein said client language computer includes a client semiotic base which is provided by structuring a system of meanings of the everyday language, and a client meaning processing mechanism for understanding a meaning of a language text and generating a language text on the basis of said client semiotic base, and said network language computer includes a network semiotic base provided by structuring a system of meanings of the everyday language, and a network meaning processing mechanism for understanding a meaning of a language text and generating a language text on the basis of said network semiotic base,
said client semiotic base and said network semiotic base being associated with each other under control of said client-oriented language operating system and said network-oriented language operating system.

24. An everyday language-based computing system as set forth in claim 21, wherein said client-oriented language operating system has a secretary agent for interactively exchanging a language text between a user and said client language computer, and said network-oriented language operating system has a network manager agent for exchanging a language text from and to said secretary agent and for managing said network language computer.

25. An everyday language-based computing system as set forth in claim 24, wherein said client-oriented language operating system further includes a client knowledge base which is managed by said secretary agent, and said network-oriented language operating system further includes a network knowledge base which is managed by said network manager agent, said client knowledge base and said network knowledge base being associated with each other under control of said secretary agent and said network manager agent.

26. An everyday language-based computing system as set forth in claim 21, wherein said network-oriented language operating system manages a process relating to a processing of a language text which is exchanged from and to said client computing system.

27. An everyday language-based computing system as set forth in claim 21, wherein said network-oriented language operating system manages a language file including a language text which is exchanged from and to said client computing system.

28. An everyday language computing method of processing a language text described or dictated by an everyday language to understand a meaning of a language text, by referring to a semiotic base, said semiotic base including an electronic dictionary for holding a plurality of dictionary items including lexico-grammatical information and semantic information, a lexico-grammar base for systematically holding a plurality of lexico-grammatical features of a language and a plurality of semantic roles corresponding thereto, and a semantic base for systematically holding a plurality of semantic features of a language and a plurality of semantic roles corresponding thereto, wherein said lexico-grammatical features held in said lexico-grammatical base and said semantic features held in said meaning base are associated with the lexico-grammatical information and the semantic information of each of said dictionary items held in said electronic dictionary, respectively, said everyday language computing method comprising the steps of:
referring to said electronic dictionary to carry out a parsing and a parsing to identify a lexico-grammatical feature of a character string which is included in a language text serving as an object to be processed;
referring to said lexico-grammar base to identify a semantic role corresponding to the identified lexico-grammatical feature;
referring to said electronic dictionary to output a dictionary item including the identified lexico-grammatical feature;
referring to said semantic base to extract semantic information which is included in the outputted dictionary item; and
identifying a semantic feature corresponding to the identified semantic role to understand a meaning of the language text, on the basis of the extracted semantic information.

29. An everyday language computing method as set forth in claim 28, wherein said semiotic base further includes a situation base for systematically holding a plurality of situation types indicative of a situation, in which a language is used, and a plurality of situation features corresponding thereto, both of said lexico-grammar base and said meaning base holding a plurality of registers of a language, which are associated with the situation types held in said situation base,
further comprising the steps of:
referring to said situation base and said lexico-grammar base to identify a situation type corresponding to a register of a lexico-grammatical feature of a character string which is included in a language text serving as an object to be processed; and
referring to said situation base and said meaning base to identify a register of a semantic feature corresponding to the identified situation type,
wherein a semantic feature corresponding to the identified semantic role is identified to understand a meaning of the language text within the register of the identified semantic feature.

30. An everyday language computing method of generating a language text described or dictated by an everyday language, by referring to a semiotic base, said semiotic base including a situation base for systematically holding a plurality of situation types indicative of a situation, in which a language is used, and a plurality of situation features corresponding thereto, a meaning base for systematically holding a plurality of semantic features of a language and a plurality of semantic roles corresponding thereto, and a corpus for holding a plurality of language texts serving as examples of exchange of a language, together with the situation features and semantic features of a language, said situation base further holding a plurality of generic structures of text corresponding to said situation types, and said meaning base further holding a plurality of registers of a language, which are associated with the situation types held in said situation base, and a plurality of global plan templates which are associated with the generic structures of text held in said situation base, said everyday language computing method comprising the steps of:
referring to said situation base and said meaning base to identify a global plan template which is relevant to a generic structure of text corresponding to a situation type during generation of a language text;
referring to said meaning base to prepare a local plan on the basis of the identified global plan template and a predefined semantic feature; and
generating a language text on the basis of the prepared local plan and the examples of the language texts held in said corpus.

31. An everyday language computing method as set forth in claim 30, wherein said semiotic base further includes a lexico-grammar base for systematically holding a plurality of lexico-grammatical features of a language and a plurality of semantic roles corresponding thereto, said lexico-grammar base holding a plurality of registers of a language, which are associated with the situation types held in said situation base, said corpus holding a plurality of language texts serving as examples of exchange of a language, together with the situation features, semantic features and lexico-grammatical features of a language,
further comprises the steps of:
referring to said lexico-grammar base to identify a register of a lexico-grammatical feature corresponding to a situation type during generation of a language text;
referring to said semantic base to identify a semantic role corresponding to a semantic feature which is included in said local plan; and
referring to said lexico-grammatical base to identify a lexico-grammatical feature corresponding to the identified semantic role within the identified register of the lexico-grammatical feature,
wherein a language text is generated on the basis of the identified lexico-grammatical feature, said local plan, and the examples of the language texts held in said corpus.

32. An everyday language computing method as set forth in claim 31, wherein said semiotic base further includes an electronic dictionary for holding a plurality of dictionary items including lexico-grammatical information and semantic information, and lexico-grammatical features held in said lexico-grammar base and semantic features held in said meaning base are associated with lexico-grammatical information and semantic information of each of said dictionary items held in said electronic dictionary, respectively,
further comprising the steps of:
referring to said electronic dictionary to output a dictionary item including the semantic feature, which is included in said local plan, and the identified lexico-grammatical feature; and
referring to said lexico-grammar base to combine the identified lexico-grammatical feature with the outputted dictionary item,
wherein a language text is generated by the combination of the identified lexico-grammatical feature with the outputted dictionary item.
